# EUROPÄISCHE PATENTSCHRIFT

(11) **EP 3 699 357 B1**
(45) Veröffentlichungstag und Bekanntmachung des Hinweises auf die Patenterteilung: **21.07.2021**
(21) Anmeldenummer: 20157903.4
(22) Anmeldetag: 18.02.2020
(51) Int. Cl.: E01C 19/00, E01C 19/48, E01C 23/088, G05D 1/02, H04W 4/38, H04W 4/46

(54) **ARBEITSZUG, UMFASSEND EINE SELBSTFAHRENDE BODENBEARBEITUNGSMASCHINE UND WENIGSTENS EIN WEITERES SELBSTFAHRENDES FAHRZEUG, MIT EINER AUTOMATISIERTEN ABSTANDSÜBERWACHUNG**
WORK TRAIN COMPRISING A SELF-PROPELLED SOIL WORKING MACHINE AND AT LEAST ONE OTHER SELF-PROPELLED VEHICLE, WITH AN AUTOMATED DISTANCE MONITORING
TRAIN DE TRAVAUX, COMPRENANT UNE MACHINE AUTOPROPULSÉE DE TRAITEMENT DU SOL ET AU MOINS UN AUTRE VÉHICULE AUTOPROPULSÉ, AVEC UNE SURVEILLANCE AUTOMATISÉE DES DISTANCES

(30) Priorität: 19.02.2019 DE 102019104218
(43) Veröffentlichungstag der Anmeldung: 26.08.2020
(73) Patentinhaber: Wirtgen GmbH, 53578 Windhagen (DE)
(72) Erfinder: FRITZ, Matthias, 53773 Hennef (DE); LANGE, Herbert, 51491 Overath (DE); PEES, Marc, 56589 Niederbreitbach (DE); KANIA, Carmen, 53809 Ruppichteroth (DE)
(74) Vertreter: Ruttensperger Lachnit Trossin Gomoll

(56) Entgegenhaltungen:
- US-A1- 2018 142 427

## Beschreibung

Die vorliegende Erfindung betrifft einen Arbeitszug, umfassend eine selbstfahrende Bodenbearbeitungsmaschine als ein erstes Fahrzeug und wenigstens ein weiteres selbstfahrendes Fahrzeug, wobei die Fahrzeuge des Arbeitszuges dazu ausgebildet sind, sich während eines bestimmungsgemäßen Arbeitsbetriebs mit einem in einem vorbestimmten Soll-Abstandswertebereich gelegenen Soll-Abstand hintereinander in eine gemeinsame Arbeitsrichtung zu bewegen, wobei der Arbeitszug eine Abstandsüberwachungseinrichtung aufweist, welche nach Maßgabe eines von einem tatsächlichen Ist-Abstand der Fahrzeuge abhängigen Erfassungszustands der Abstandsüberwachungseinrichtung ein Abstandssignal ausgibt, das eine Information über den Fahrzeugabstand enthält, wobei die Abstandsüberwachungseinrichtung eine elektromagnetische Strahlung aussendende Strahlenquelle und eine für die elektromagnetische Strahlung der Strahlenquelle sensitive Sensoranordnung aufweist, wobei ein Fahrzeug aus dem ersten und dem weiteren Fahrzeug als Quellenfahrzeug die Strahlenquelle mitführt, wobei dann, wenn sich der Arbeitszug in einem vorbestimmten Bezugszustand, d. h. auf einem ebenen horizontalen Untergrund mit in einem vorbestimmten Bezugsabstand voneinander entfernt arbeitsbetriebsbereit angeordneten Fahrzeugen, befindet, die Strahlenquelle in Richtung zu dem jeweils anderen Fahrzeug aus dem ersten und dem weiteren Fahrzeug als einem Zielfahrzeug eine elektromagnetische Strahlung derart gerichtet abstrahlt, dass die elektromagnetische Strahlung zur Abstandsüberwachung nur in einem Strahlenraum vorhanden ist, welcher sich über einen ersten Winkelbereich um eine erste Strahlenraumachse sowie über einen zweiten Winkelbereich um eine mit der ersten Strahlenraumachse einen Winkel einschließende zweite Strahlenraumachse erstreckt, wobei der zweite Winkelbereich betragsmäßig gleich groß ist wie oder größer ist als der erste Winkelbereich und wobei der Strahlenraum bezüglich der Arbeitsrichtung um die erste Strahlenraumachse geneigt ist.

Ein solcher Arbeitszug ist aus der US 2018/0142427 A1, insbesondere aus deren Figur 6 bekannt. Die Bodenbearbeitungsmaschine ist darin ein Straßenfertiger, nachfolgend auch kurz als "Fertiger" bezeichnet. Das weitere Fahrzeug ist ein den Fertiger während dessen Betrieb mit Asphalt beladender Beschicker.

An dem bekannten Beschicker ist eine LED-Lichtquelle angeordnet, welche Licht in einem vertikal schmalen, einen Öffnungswinkel von 6° nicht überschreitenden, und horizontal in etwa sich über die Breite des Fertigers erstreckenden Strahlenraum zum Fertiger ausstrahlt.

Vom Fertiger reflektiertes Licht der LED-Lichtquelle wird von einer Sensoranordnung am Beschicker erfasst. Aus der Laufzeit des Lichts von der LED-Quelle zum Fertiger und zurück zur Sensoranordnung wird der Abstand zwischen dem Beschicker und dem Fertiger betragsmäßig errechnet und ein diese Abstandsinformation enthaltendes Abstandssignal am Beschicker zur Unterstützung der Bewegungssteuerung des Arbeitszuges ausgegeben.

Nachteilig an diesem Arbeitszug ist zum einen der hohe Aufwand, der zur Abstandsmessung betrieben werden muss. Es muss nämlich eine zur Abstandsrichtung zwischen Fertiger und Beschicker möglichst orthogonale und ebene Fläche am Beschicker bestrahlt werden, denn vorspringende und zurückgesetzte Strukturen sowie unterschiedlich geneigte Oberflächenbereiche am bestrahlten Bereich des Fertigers können unerwünschte Signalstörungen verursachen oder das zur Laufzeitbestimmung benötigte reflektierte Licht "verrauschen".

Zum anderen muss zur Ermittlung von Laufzeiten des Lichts aufwendig moduliertes Licht von der bekannten LED-Lichtquelle abgestrahlt werden, damit Laufzeiten überhaupt erkennbar werden.

Gerade in stark schmutzbelasteter Baustellenumgebung mit zusätzlicher thermischer Belastung, auch Wechselbelastung, der am Arbeitszug beteiligten Fahrzeuge ist daher eine weniger komplexe und daher robustere, aber im Ergebnis wenigstens ebenso genau arbeitende Lösung zur Abstandsüberwachung der Fahrzeuge des Arbeitszuges wünschenswert.

Es ist daher Aufgabe der vorliegenden Erfindung, einen Arbeitszug der eingangs genannten Art so weiterzuentwickeln, dass der zwischen seinen Fahrzeugen einzuhaltende Abstand mit einfachen, störungsunanfälligen Mitteln überwacht werden kann. Der Abstand soll weiterhin ohne mechanisch-körperliche Kopplung der Fahrzeuge eingehalten werden können.

Diese Aufgabe löst die vorliegende Erfindung mit einem Arbeitszug, wie er eingangs der vorliegenden Anmeldung beschrieben ist, bei welchem zusätzlich die Sensoranordnung sich längs einer Sensorachse erstreckt und am Zielfahrzeug zur Mitführung durch dieses angeordnet ist, wobei - bei Betrachtung des Arbeitszuges im Bezugszustand - ein vorbestimmter sensoraxialer Bezugserfassungsbereich an der Sensoranordnung von der Strahlenquelle bestrahlt wird, und wobei die Sensorachse relativ zu einer Verbindungsgeraden zwischen dem Erfassungsbereich und der Strahlenquelle um eine zur ersten Strahlenraumachse parallele Neigeachse geneigt, also nicht-parallel, angeordnet ist, so dass eine Veränderung des Fahrzeugabstands zu einer Lageänderung des von der Strahlenquelle bestrahlten Erfassungsbereichs an der Sensoranordnung längs der Sensorachse und somit zu einer Änderung des Erfassungszustands der Sensoranordnung führt. Die Sensorachse kann, muss aber nicht, um eine weitere Achse geneigt sein.

Die Erfassung der von der Strahlenquelle abgestrahlten elektromagnetischen Strahlung durch die Sensoranordnung erfolgt bevorzugt im direkten Strahlengang, d. h. ohne vorherige Reflexion an einer Fahrzeugoberfläche. Aufgrund der angegebenen Neigungen sowohl des Strahlenraums als auch der sich im Bezugszustand wenigstens abschnittsweise im Strahlenraum befindenden Sensoranordnung führt eine Änderung des Abstands zwischen den Fahrzeugen des Arbeitszugs ausgehend vom Bezugsabstand oder von einem beliebigen anderen Startabstand zu einer Verlagerung des von der Strahlenquelle bestrahlten Erfassungsbereichs der Sensoranordnung längs deren Sensorachse. Diese Änderung ist richtungssensitiv, d. h. sie erfolgt ausgehend von einem zunächst bestrahlten Erfassungsbereich bei Verkürzung des Fahrzeugabstands an der Sensoranordnung in stets gleicher Richtung und bei Vergrößerung des Fahrzeugabstands in stets gleicher entgegengesetzter Richtung.

Bei einem einmal eingerichteten Arbeitszug, bei welchem die Strahlenquelle im Bezugszustand einen vorbestimmten Erfassungsbereich der Sensoranordnung bestrahlt, während vorzugsweise ein sensoraxial auf wenigstens einer Seite des bestrahlten Erfassungsbereichs gelegener Dunkelbereich der Sensoranordnung nicht bestrahlt wird, kann - und wird vorzugsweise - die Abstandsüberwachung ohne betragsmäßige Berechnung des Abstands alleine auf Grundlage der Lage des bestrahlten Erfassungsbereichs an der Sensoranordnung relativ zu einer Bezugslage durchgeführt werden.

Mit "sensoraxial" ist zum Ausdruck gebracht, dass es sich das Adjektiv "axial" auf die Sensorachse bezieht. Es ist gleichbedeutend mit "längs der Sensorachse".

Bevorzugt ist im Bezugszustand sensoraxial beiderseits des bestrahlten Erfassungsbereichs je ein Dunkelbereich der Sensoranordnung vorhanden, so dass bei Veränderung des Abstands ausgehend vom Bezugsabstand in beiden Richtungen der Erfassungsbereich einen zuvor nicht bestrahlten Bereich der Sensoranordnung bestrahlen kann und bevorzugt einen zuvor bestrahlten Bereich dann nicht mehr bestrahlt. Im Bezugszustand durchsetzt daher die Sensoranordnung vorzugsweise den Strahlenraum vollständig und ragt in Durchsetzungsrichtung, also längs ihrer Sensorachse, beiderseits aus diesem heraus.

Weiterhin bevorzugt kann die Sensoranordnung sensoraxial aufeinanderfolgend eine Mehrzahl von für die elektromagnetische Strahlung der Strahlenquelle sensitive Sensorelemente aufweisen, so dass abhängig von der sensoraxialen Position des Erfassungsbereichs unterschiedliche Sensorelemente mit der elektromagnetischen Strahlung der Strahlenquelle bestrahlt werden, bzw. nicht bestrahlt werden, wenn sie im Dunkelbereich des jeweiligen Erfassungszustands gelegen sind.

Der Bezugsabstand liegt bevorzugt in dem Soll-Abstandswertebereich, besonders bevorzugt jeweils mit Abstand, vorzugsweise mit gleichem Abstand, zu den beiden Rändern des Soll-Abstandswertebereichs.

Für die Bemessung des Abstandes ist es grundsätzlich gleichgültig, anhand welcher Bezugspunkte an den beiden Fahrzeugen des Arbeitszuges der Abstand bestimmt wird, solange nur dieser für einen gegebenen Arbeitszug stets anhand der gleichen Bezugspunkte bestimmt wird.

Die Arbeitsrichtung ist somit wenigstens bei gemeinsamer Geradeausfahrt auch die Abstandsrichtung. Sofern sich die beiden Fahrzeuge des Arbeitszuges, etwa wegen Kurvenfahrt, oder wegen Überfahren einer Kuppe oder Durchfahren einer Mulde lokal in unterschiedliche Raumrichtungen bewegen, ist im Zweifelsfall die Arbeitsrichtung die kürzeste Verbindung zwischen den Bezugspunkten zur Abstandsbestimmung bei Geradeausfahrt. Die beiden Bezugspunkte befinden sich in gleicher Höhe über dem Untergrund, auf welchem sich die beiden Fahrzeuge des Arbeitszugs bewegen, so dass die Arbeitsrichtung in einem Bezugszustand, in welchem der Arbeitszug mit einem vorbestimmten Bezugsabstand auf einem ebenen Untergrund aufsteht, parallel zur Aufstandsebene des Untergrundes verläuft.

Da der Untergrund, auf dem der Arbeitszug aufsteht, wenigstens durch das erste Fahrzeug bearbeitet werden kann, können längs des Arbeitszugs mehr als eine Aufstandsebene bestehen. Dies gilt umso mehr, als auch das weitere Fahrzeug eine Bodenbearbeitungsmaschine sein kann. Im Zweifel ist der Untergrund und die durch ihn definierte Aufstandsfläche, wenn der Untergrund oder dessen Aufstandsfläche als Bezugsgröße dienen, der in Arbeitsrichtung zwischen den Fahrzeugen gelegene Untergrund bzw. die durch diesen definierte Oberfläche.

Grundsätzlich funktioniert die oben beschriebene Abstandsüberwachung bereits mit einer einzigen Strahlenquelle am Quellenfahrzeug und mit einer einzigen Sensoranordnung am Zielfahrzeug des Arbeitszugs. Eine genauere und aussagekräftigere Information über den Abstand zwischen den Fahrzeugen des Arbeitszuges kann jedoch dann erhalten werden, wenn das Zielfahrzeug wenigstens zwei sich jeweils längs einer Sensorachse erstreckende Sensoranordnungen aufweist. In diesem Falle ist jede Sensorachse einer Sensoranordnung - bei Betrachtung des Arbeitszuges im Bezugszustand - relativ zu einer Verbindungsgeraden zwischen dem Erfassungsbereich und der Strahlenquelle um eine zur ersten Strahlenraumachse parallele Neigeachse geneigt angeordnet. In diesem Falle verändert sich der Erfassungszustand von mehreren Sensoranordnungen, vorzugsweise von allen Sensoranordnungen, bei Änderung des Abstands zwischen dem Quellen- und Zielfahrzeug. Die wenigstens zwei Sensoranordnungen sind dann bevorzugt in Umfangsrichtung um die zweite Strahlenraumachse mit Abstand voneinander angeordnet. Die Ausdehnung des Strahlenraums längs des zweiten Winkelbereichs dient dazu, einen möglichst großen Winkelbereich mit der Strahlung der Strahlenquelle zu bestrahlen bzw. zu beleuchten, so dass in diesem möglichst großen zweiten Winkelbereich an verhältnismäßig weit voneinander entfernt gelegenen Orten je eine Sensoranordnung am Zielfahrzeug angeordnet werden kann. Bevorzugt ist daher der zweite Winkelbereich größer als der erste Winkelbereich.

Durch möglichst große Entfernung zwischen wenigstens zwei Sensoranordnungen können Signale der jeweiligen Sensoranordnungen neben einer Erzielung einer Erfassungsredundanz auch herangezogen werden, um Änderungen von Erfassungszuständen, die ohne tatsächliche Abstandsänderung nur auf eine Änderung der relativen Orientierung der Fahrzeuge des Arbeitszuges zurückgehen, von auf tatsächlichen Abstandsänderungen beruhenden Änderungen des Erfassungszustands zu unterscheiden. Die Aussagekraft des Abstandssignals der Abstandsüberwachungseinrichtung wird dadurch erhöht.

Grundsätzlich kann die elektromagnetische Strahlung der Strahlenquelle eine beliebige Strahlung sein, so lange sie nur mit ausreichender Intensität auf einen verhältnismäßig kleinen ersten Winkelbereich begrenzt werden kann. Ein solcher erster Winkelbereich ist vorzugsweise nicht größer als 3° um die erste Strahlenraumachse. Eine nahezu überall verfügbare und gleichzeitig hochgenaue, weil lokal stark begrenzbare elektromagnetische Strahlung wird von einer Laserstrahlenquelle als Laserlicht abgestrahlt. Daher ist eine Laserstrahlenquelle als die oben genannte Strahlenquelle bevorzugt. Eine Laserstrahlenquelle kann über mehrere 10 Meter kohärentes Licht ausstrahlen und kann somit auch über mehrere 10 Meter nur einen Lichtpunkt erzeugen. Dabei übersteigt der Soll-Abstandswertebereich im Sinne einer lichten Weite zwischen den Arbeitszug-Fahrzeugen in der Regel Abstandswerte von 20 Metern nicht oder nur selten.

Bevorzugt ist der erste Winkelbereich auf die bloße Ausdehnung des Laserstrahls begrenzt, den die Laserstrahlenquelle als bevorzugte Strahlenquelle ausstrahlt. In diesem Falle ist der erste Winkelbereich deutlich kleiner als 3°.

Der zweite Winkelbereich kann zur Überstreichen eines möglichst großen Bereichs am Zielfahrzeug durch gezielte Ausrichtung des von der Strahlenquelle ausgestrahlten Laserstrahls bzw. der ausgestrahlten elektromagnetischen Strahlung erzeugt werden. Hierzu kann die Strahlenquelle einen um die zweite Strahlenraumachse oszillierenden oder rotierenden Laserstrahl ausstrahlen. Ein rotierender Laserstrahl kann aus Arbeitsschutzgründen in Umfangsbereichen um die zweite Strahlenraumachse, wo sicher keine Zielfahrzeugbestrahlung erfolgen wird, abgeschattet sein, um auf der Baustelle in der Umgebung des Arbeitszuges arbeitendes Personal vor einer Bestrahlung mit der elektromagnetischen Strahlung, insbesondere dem Laserstrahl, zu schützen.

Zwar sind viele Fahrzeuge höher als breit, oder mit anderen Worten: Weisen längs ihrer Gierachse eine größere Erstreckung auf als längs ihrer Nickachse. Jedoch ist gerade bei einer Bodenbearbeitung nicht erwünscht, eine empfindliche Sensoranordnung in der Nähe des Untergrundes anzuordnen. Bevorzugt ist die Sensoranordnung mit Entfernung vom Untergrund am Zielfahrzeug angeordnet. Dies gilt auch für den Fall, dass mehr als eine Sensoranordnung am Zielfahrzeug vorgesehen ist. Eine vorteilhafte Anordnung einer Sensoranordnung, insbesondere von mehreren Sensoranordnungen in Richtung parallel zur Gierachse mit Abstand vom Untergrund des Zielfahrzeugs bei gleichzeitig großer Freiheit in der Anordnung der wenigstens einen Sensoranordnung in Richtung parallel zur Nickachse am Zielfahrzeug kann dadurch ermöglicht werden, dass die erste Strahlenraumachse zur Nickachse des Quellenfahrzeugs parallel ist oder/und dass die zweite Strahlenraumachse in einer oder parallel zu einer aus Gierachse und Rollachse des Quellenfahrzeugs aufgespannten Ebene gelegen ist.

Die zweite Strahlenraumachse kann dabei parallel zur Gierachse sein; dann wird ein von einer bevorzugten rotierenden oder oszillierenden Laserstrahlquelle ausgehender Laserstrahl einen Konusmantel oder einen Teil-Konusmantel beschreiben. Oder die zweite Strahlenraumachse ist sowohl zur Gierachse als auch zur Rollachse geneigt, dann kann der Strahlenraum besonders bevorzugt eine vom Laserstrahl aufgespannte Ebene bzw. im Falle eines oszillierenden Laserstrahls ein ebener Sektor sein. Dabei ist der Begriff der "Ebene" nicht im rein mathematischen Sinne zu verstehen. Die hier beschriebene Ebene hat eine Ausdehnung orthogonal zu ihrer ebenen Fläche, die der Dicke des Laserstrahls entspricht. Vorteilhaft kann eine Änderung des Erfassungszustands dann zuverlässig erfasst werden, wenn die Sensorachse wenigstens einer Sensoranordnung in einem kartesischen Fahrzeugkoordinatensystem aus Roll-, Nick- und Gierachse eine größere Erstreckungskomponente parallel zu der aus Gierachse und Rollachse des Zielfahrzeugs aufgespannten Ebene als orthogonal dazu aufweist.

Bevorzugt ist dabei die Sensoranordnung parallel zu der aus Gierachse und Rollachse des Zielfahrzeugs aufgespannten Ebene. Zusätzlich oder alternativ kann die wenigstens eine Sensoranordnung, vorzugsweise jede Sensoranordnung, mit ihrer Sensorachse orthogonal zu einer Abstandsgeraden zwischen der Sensoranordnung und der Strahlenquelle orientiert angeordnet sein. In diesem Falle weist die Sensoranordnung eine große Sensitivität im Falle einer Abstandsänderung bei gleichzeitig großem Sensierungsbereich auf.

Zur Erleichterung einer Justage der Abstandsüberwachungseinrichtung ist bevorzugt die Strahlenquelle oder/und ist bevorzugt die wenigstens eine Sensoranordnung relativ zu einem Fahrzeugkörper des sie jeweils tragenden Fahrzeugs beweglich an dem Quellenfahrzeug bzw. an dem Zielfahrzeug angeordnet.

Manchmal kann es sein, dass sich während eines Arbeitsbetriebs der Soll-Abstand oder/und der Soll-Abstandswertebereich zwischen Quellen- und Zielfahrzeug ändern soll, beispielsweise weil eines der beiden Fahrzeuge aus Quellen- und Zielfahrzeug gegen ein gleichwirkendes aber konstruktiv andersartig aufgebautes Fahrzeug ausgetauscht wird. In einem solchen Fall ist es vorteilhaft, wenn die jeweiligen Fahrzeugführer oder der einzige Fahrzeugführer im Falle einer automatisierten Abstandsregelung, seinen Fahrstand zur Einrichtung der Abstandsüberwachungseinrichtung auf die neue Betriebssituation nicht verlassen muss. Zu diesem Zweck kann gemäß einer vorteilhaften Weiterbildung der vorliegenden Erfindung vorgesehen sein, dass das Quellenfahrzeug einen Quellenaktuator oder/und das Zielfahrzeug einen Sensoraktuator aufweist, wobei der Quellenaktuator bewegungsübertragend mit der Strahlenquelle oder/und der Sensoraktuator bewegungsübertragend mit der Sensoranordnung gekoppelt ist, so dass die Strahlenquelle oder/und die wenigstens eine Sensoranordnung an dem sie jeweils tragenden Fahrzeug um eine zur ersten Strahlenraumachse parallele Einstellachse relativ zum jeweiligen Fahrzeugkörper aktuatorisch verlagerbar aufgenommen ist bzw. sind. Einer oder beide genannten Aktuatoren können zusätzlich um eine weitere Einstellachse verlagerbar sein.

In der vorliegenden Anmeldung wird der Arbeitszug, sofern nichts anderes ausdrücklich angegeben ist, in dem Bezugszustand beschrieben, d. h. die beiden Fahrzeuge des Arbeitszuges befinden sich in Arbeitsrichtung aufeinander folgend auf einem ebenen horizontalen Untergrund. Ihre Gierachsen sind parallel, ebenso ihre Nickachsen. Die Rollachsen der beiden Fahrzeuge, die sich parallel zur Arbeitsrichtung erstrecken, sind im Bezugszustand parallel oder kollinear.

Abhängig von den Anbringungsorten der Strahlenquelle einerseits und der Sensoranordnung andererseits kann eine Änderung des Betriebszustands des Arbeitszugs ausgehend vom Bezugszustand, etwa durch Kurvenfahrt des Arbeitszuges, zu einer Änderung des Erfassungszustands der Abstandsüberwachungseinrichtung führen, ohne dass sich der Abstand zwischen den Fahrzeugen des Arbeitszuges tatsächlich ändert. Um die Wahrscheinlichkeit einer Fehlerfassung oder Fehlbeurteilung des Erfassungszustands der Abstandsüberwachungseinrichtung zu verringern, kann gemäß einer Weiterbildung der vorliegenden Erfindung vorgesehen sein, dass die Abstandsüberwachungseinrichtung eine Steuereinrichtung aufweist und dass das erste oder/und das weitere Fahrzeug eine Gierwinkel-Erfassungsvorrichtung aufweist, welche einen Gierwinkel des jeweiligen Fahrzeugs erfasst, wobei wenigstens eine Gierwinkel-Erfassungsvorrichtung ein Gierwinkelsignal, welches eine Information über den Gierwinkel wenigstens eines Fahrzeugs enthält, an die Steuereinrichtung überträgt, wobei die Steuereinrichtung das Abstandssignal nach Maßgabe des Erfassungszustands der wenigstens einen Sensoranordnung und nach Maßgabe des Gierwinkelsignals der wenigstens einen Gierwinkel-Erfassungsvorrichtung erzeugt.

Die Gierwinkel-Erfassungsvorrichtung kann die Information über den Gierwinkel wenigstens eines Fahrzeugs in beliebiger Weise erfassen, beispielsweise durch ein GPS-System oder durch entsprechende Sensoren, wie sie beispielsweise auch in Mobiltelefonen zur Ermittlung ihrer räumlichen Orientierung verwendet werden. Dabei kann der Gierwinkel eines Fahrzeugs zusätzlich oder alternativ zu einem den Gierwinkel unmittelbar erfassenden Gierwinkelsensor mittelbar durch Erfassung des Lenkwinkels sowie der vom Fahrzeug zurückgelegten Strecke oder/und der Fahrzeuggeschwindigkeit über einen gemeinsamen Zeitraum erfasst werden.

Vorzugsweise weist jedes Fahrzeug des Arbeitszuges eine Gierwinkel-Erfassungsvorrichtung auf, so dass durch Datenkommunikation zwischen den beiden Fahrzeugen ein Relativgierwinkel der beiden Fahrzeuge relativ zueinander unmittelbar und exakt erfassbar ist.

Es kann jedoch auch nur ein Fahrzeug eine Gierwinkel-Erfassungsvorrichtung aufweisen. Das ist dann bevorzugt das in Arbeitsrichtung vorausfahrende Fahrzeug. Beginnt der Arbeitszug seinen Arbeitsbetrieb im Bezugszustand oder in einem definierten bekannten Zustand mit bekannter relativer Orientierung der Fahrzeuge des Arbeitszugs zueinander, kann wenigstens ein Fahrzeug des Arbeitszuges, bevorzugt wiederum das in Arbeitsrichtung vorausfahrende Fahrzeug, anhand der Fahrgeschwindigkeit des in Arbeitsrichtung vorausfahrenden Fahrzeugs und anhand einer Abstandsinformation aus der Abstandsüberwachungseinrichtung unter der vernünftigen Annahme, dass sich der Gierwinkel des nachlaufenden Fahrzeugs örtlich längs der Arbeitsstrecke in gleicher Weise ändern wird wie der Gierwinkel des vorausfahrenden Fahrzeugs, einen zeitlichen oder/und örtlichen Versatz zwischen einer Gierwinkeländerung des vorausfahrenden Fahrzeugs und des nachlaufenden Fahrzeugs ermitteln. Dieser zeitliche oder/und örtliche Versatz kann von der Steuereinrichtung bei der Auswertung des Erfassungszustands zur Erzeugung des Abstandssignals berücksichtigt werden.

Vorteilhaft weist die Steuereinrichtung eine Eingabevorrichtung auf, mit welcher Daten in die Steuereinrichtung und damit in die Abstandsüberwachungseinrichtung eingebbar sind. Die Eingabevorrichtung kann eine Tastatur, Maus, Touchscreen, Mikrofon und dergleichen umfassen. Mit dieser Eingabevorrichtung kann beispielsweise ein dem Bezugsabstand zugeordneter Abstandswert in einer vorgegebenen oder auswählbaren Maßeinheit eingegeben werden, so dass anhand der Geschwindigkeitsinformation eines der Fahrzeuge und anhand des Abstandswerts der zeitliche oder/und örtliche Versatz von Gierwinkeländerungen zwischen den beiden Fahrzeugen des Arbeitszuges errechnet werden kann.

Ebenso kann durch die Eingabevorrichtung in die Steuereinrichtung eingebbar sein, welche Abstandsänderung zwischen den Fahrzeugen einer vorbestimmten Lageänderung des Erfassungsbereichs der elektromagnetischen Strahlung an der Sensoranordnung entspricht. Bei feststehender Orientierung der Sensoranordnung und der Strahlenquelle kann diese Information auch in einem Datenspeicher der Steuereinrichtung hinterlegt sein. Für eine aus etwaigen Stellungen von Quellen- oder/und Sensoraktuatoren ermittelbare Orientierung von Sensoranordnung und Strahlenquelle kann diese Information auch unter Berücksichtigung von in einem Datenspeicher hinterlegten Daten für unterschiedliche Orientierungen ermittelbar sein.

Was für die relative Änderung der Fahrzeugorientierung ausgehend vom Bezugszustand um eine gierachsenparallele Änderungsachse bei Kurvenfahrt gilt, kann zusätzlich oder alternativ auch für eine Änderung der Relativorientierung der beiden Fahrzeuge um eine nickachsenparallele Änderungsachse beim Überfahren einer Geländekuppe oder beim Durchfahren einer Geländemulde gelten. Aus diesem Grunde kann zur Erhöhung der Erfassungsgenauigkeit gemäß einer vorteilhaften Weiterbildung der vorliegenden Erfindung vorgesehen sein, dass die Abstandsüberwachungseinrichtung eine Steuereinrichtung aufweist und dass das erste oder/und das weitere Fahrzeug eine Nickwinkel-Erfassungsvorrichtung aufweist, welche einen Nickwinkel des jeweiligen Fahrzeugs erfasst, wobei wenigstens eine Nickwinkel-Erfassungsvorrichtung ein Nickwinkelsignal, welches eine Information über den Nickwinkel wenigstens eines Fahrzeugs enthält, an die Steuereinrichtung überträgt, wobei die Steuereinrichtung das Abstandssignal nach Maßgabe des Erfassungszustands der wenigstens einen Sensoranordnung und nach Maßgabe des Nickwinkelsignals der wenigstens einen Nickwinkel-Erfassungsvorrichtung erzeugt.

Es gilt für die Nickwinkel-Erfassungsvorrichtung das oben zur Gierwinkel-Erfassungsvorrichtung Gesagte mutatis mutandis entsprechend, mit der Maßgabe, dass der Gierwinkel durch den Nickwinkel und dementsprechend eine Gierachse durch eine Nickachse ersetzt gedacht sein soll.

Gerade dann, wenn die oben als bevorzugt angegebene Ausführungsform mit einer Mehrzahl von Sensoranordnungen am Zielfahrzeug realisiert ist, wobei die Sensoranordnungen am Zielfahrzeug in Umfangsrichtung um die Gierachse des Quellenfahrzeugs mit Abstand voneinander angeordnet sind, ändern sich bei einer Änderung des Relativgierwinkels der beiden Fahrzeuge des Arbeitszugs die Erfassungszustände von wenigstens zwei Sensoranordnungen dann gegensinnig, wenn die beiden Sensoranordnungen auf unterschiedlichen Seiten einer zur Rollachse und zur Gierachse des Zielfahrzeugs parallelen Vertikallängsebene durch die Strahlenquelle angeordnet sind. Bei Änderung des Relativnickwinkels ändern sich dagegen die Erfassungszustände derartiger Sensoranordnungen gleichsinnig. Wenngleich oben bereits herausgestellt wurde, dass es grundsätzlich ausreichen kann, dass das Gierwinkelsignal oder/und das Nickwinkelsignal nur eine Information über einen Gierwinkel bzw. einen Nickwinkel des die jeweilige Erfassungsvorrichtung tragenden Fahrzeugs enthält, ist es zur möglichst umfassenden und genauen Vermeidung von Erfassungsfehlern vorteilhaft, wenn das Gierwinkelsignal eine Information über den Relativgierwinkel zwischen Quellen- und Zielfahrzeug enthält oder/und dass das Nickwinkelsignal eine Information über den Relativnickwinkel zwischen Quellen- und Zielfahrzeug enthält.

Alternativ oder zusätzlich zur Anordnung von wenigstens zwei Sensoranordnungen auf unterschiedlichen Seiten der genannten Vertikallängsebene, kann eine von einer Änderung des Relativgierwinkels bewirkte Änderung des Erfassungszustands von einer durch Änderung des Relativnickwinkels bewirkten Erfassungszustandsänderung auch durch wenigstens zwei im Wesentlichen an derselben Rollachsenposition gelegenen Sensoranordnungen unterschieden werden, die zwar auf derselben Seite der Vertikallängsebene, aber mit unterschiedlichem Abstand von dieser angeordnet sind. Mit zunehmendem Abstand von der Vertikallängsebene bewirkt eine Änderung des Relativgierwinkels eine betragsmäßig zunehmende Änderung des Erfassungszustands. Für eine Änderung des Relativnickwinkels gilt dies dagegen nicht.

Vorteilhafterweise wird das Abstandssignal genutzt, um den Abstand zwischen den Fahrzeugen des Arbeitszuges während eines Arbeitsbetriebes in dem vorbestimmten Soll-Abstandswertebereich zu halten. In diesem Soll-Abstandswertebereich ist ein bestimmungsgemäßer Arbeitsbetrieb in der Regel sicher möglich. Zu diesem Zweck kann vorgesehen sein, dass das Abstandssignal eine Betriebsinformation zum Betrieb eines Antriebsmotors oder/und einer Fahrzeugbremse wenigstens eines der Fahrzeuge enthält.

Die Betriebsinformation kann eine an einen Fahrzeugführer eines der Fahrzeuge ausgegebene Information sein, sein Fahrzeug zu verzögern oder zu beschleunigen oder die Fahrzeuggeschwindigkeit unverändert zu belassen. Die Betriebsinformation kann aber auch unmittelbar eine Steuerinformation für eine Fahrzeugsteuerung sein, um eines der Fahrzeuge automatisiert, d. h. ohne Eingriff einer menschlichen Bedienperson, zu verzögern oder zu beschleunigen oder/und eine bestimmte Fahrgeschwindigkeit einzustellen. Ziel einer solchen Steuerung oder Regelung kann sein, den Erfassungsbereich der Sensoranordnung in einer vorbestimmten Erfassungszone zu halten oder in diese erforderlichenfalls zurückzuführen. Die Erfassungszone ist durch ein dem vorbestimmten Soll-Abstandswertebereich entsprechendes Abstandsintervall bestimmt.

Gemäß einer vorteilhaften Weiterbildung der vorliegenden Erfindung kann Historie-Information über die Änderung der Erfassungszustände oder/und über die Erfassungszustände in ihrem zeitlichen Verlauf in einer Datenspeichervorrichtung gespeichert werden. Die Datenspeichervorrichtung ist durch eine Steuereinrichtung, bevorzugt jene der Abstandsüberwachungseinrichtung, abfragbar. So kann selbst dann eine Betriebsinformation ausgegeben werden, die der Herstellung eines Betriebszustands mit einem im Soll-Abstandswertebereich gelegenen Abstand der Fahrzeuge des Arbeitszugs dient, wenn die Sensoranordnung die Strahlung der Strahlenquelle nicht mehr erfasst, also wenn sich etwa die Sensoranordnung aufgrund einer betragsmäßig zu großen Abstandsänderung außerhalb des Strahlenraums befindet. Aus der in der Datenspeichervorrichtung hinterlegten Historie-Information kann dann auch ohne Erfassungssignal an der Sensoranordnung ermittelt werden, in welcher Richtung der Erfassungsbereich die Sensoranordnung verlassen hat. Abhängig von dieser Richtung ist ermittelbar, ob eines der Fahrzeuge beschleunigt oder verzögert werden muss, um den aktuell vorhandenen Abstand zu einem Abstand im Soll-Abstandswertebereich zu verändern.

Da die Fahrzeuge eines Arbeitszuges nicht unabhängig voneinander arbeiten und beispielsweise Betriebsgrenzen bestehen können, die für einen erfolgreichen Arbeitsbetrieb einzuhalten sind, ist es vorteilhaft, wenn die Fahrzeuge des Arbeitszugs durch eine Datenkommunikationsverbindung in wenigstens einer Datenübertragungsrichtung, vorzugsweise bidirektional, in Datenkommunikationsverbindung miteinander stehen.

So kann beispielsweise eines der beiden Fahrzeuge dem jeweils anderen Fahrzeug über die Datenkommunikationsverbindung mitteilen, dass es eine Grenzarbeitsgeschwindigkeit erreicht hat und nicht weiter beschleunigen oder nicht weiter verzögern kann. Dies kann gerade für eine automatisierte Einstellung des Abstands zwischen den Fahrzeugen eines Fahrzeugzuges hilfreich sein. Zur möglichst definierten Führung des Arbeitszuges in Arbeitsrichtung ist es weiter vorteilhaft, wenn ein Fahrzeug aus Quellenfahrzeug und Zielfahrzeug als Führungsfahrzeug eine Bewegungsgeschwindigkeit des Arbeitszugs längs der Arbeitsrichtung vorgibt und dass das Abstandssignal an das jeweils andere Fahrzeug aus Quellenfahrzeug und Zielfahrzeug als Folgefahrzeug ausgegeben wird. Dabei ist in der Regel dasjenige Fahrzeug Führungsfahrzeug oder Master-Fahrzeug, dessen Änderung von Betriebsparametern sich kritischer auf das Arbeitsergebnis auswirken als eine Änderung von Betriebsparametern des jeweils anderen Fahrzeugs, das dann folgerichtig Folgefahrzeug ist.

In weiterer Präzisierung der Anzeige eines Erreichens von Grenz-Betriebsparametern kann dann vorgesehen sein, dass das Folgefahrzeug dazu ausgebildet ist, während eines bestimmungsgemäßen Arbeitsbetriebs dem Führungsfahrzeug anzuzeigen, dass ein Betriebsparameter sich seinem Parametergrenzwert über einen vorbestimmten Warnschwellenwert hinaus angenähert hat oder/und seinen Parametergrenzwert erreicht hat.

In einer bevorzugten Ausgestaltung ist das erste Fahrzeug eine Material auf dem Untergrund auftragende Bodenbearbeitungsmaschine und ist das weitere Fahrzeug ein Lieferfahrzeug, welches zum Auftrag bestimmtes Material an das erste Fahrzeug übergibt. Die Untergrund auftragende Bodenbearbeitungsmaschine, üblicherweise ein Straßenfertiger, ist dabei das Führungsfahrzeug, da Änderungen von Betriebsparametern dieses Fahrzeugs unmittelbar Einfluss auf die Qualität des erzeugten Untergrunds, wie z. B. Ebenheit oder Freiheit von Erhebungen und Einsenkungen, haben. Da Änderungen von Betriebsparametern des Lieferfahrzeugs weniger kritische Auswirkungen auf das Arbeitsergebnis des Arbeitszuges haben, ist das Lieferfahrzeug dann das Folgefahrzeug. Das Lieferfahrzeug kann ein Beschicker sein oder kann ein Transport-Lastkraftwagen sein oder kann ein Recycler sein, der unmittelbar vor einem Straßenfertiger als dem Führungsfahrzeug Untergrund abträgt, abgetragenes Material aufbereitet und zum erneuten Verbauen an den Straßenfertiger übergibt.

Als Grundregel kann herangezogen werden, dass bei Betrachtung des vom Arbeitszug insgesamt gewünschten Arbeitsergebnisses die unmittelbar konstruktiv das Arbeitsergebnis bewirkende Bodenbearbeitungsmaschine bevorzugt das Führungsfahrzeug ist und selbst dann, wenn das weitere Fahrzeug des Arbeitszuges ebenfalls eine Bodenbearbeitungsmaschine ist, diese Bodenbearbeitungsmaschine dann das Folgefahrzeug ist, wenn sie nicht unmittelbar, sondern nur mittelbar zum Arbeitsergebnis des Arbeitszuges beiträgt.

Die oben genannte Steuereinrichtung der Abstandsüberwachungseinrichtung ist bevorzugt am Folgefahrzeug angeordnet, so dass das Abstandssignal der Abstandsüberwachungseinrichtung unmittelbar an dem Fahrzeug vorliegt, auf dessen Steuerung das Abstandssignal Einfluss nehmen sollte. Das Führungsfahrzeug kann dann mit den jeweils für den gegebenen Arbeitsauftrag bestmöglichen Betriebsparametern arbeiten und das Folgefahrzeug richtet sich nach dem Führungsfahrzeug.

In einem bevorzugten Fall dient das Abstandssignal am Folgefahrzeug unmittelbar zur Geschwindigkeitssteuerung des Folgefahrzeugs, um möglichst exakt einen vorgegebenen Soll-Abstand zwischen den Fahrzeugen innerhalb des vorgegebenen Soll-Abstandswertebereichs einzuhalten.

Da das Abstandssignal anhand des Erfassungszustands der Sensoranordnung ermittelt wird, ist bevorzugt auch die Sensoranordnung am Folgefahrzeug angeordnet, während die Strahlenquelle bevorzugt am Führungsfahrzeug angeordnet ist. In diesem Fall kann eine Datenkommunikation zwischen Führungsfahrzeug und Folgefahrzeug minimiert werden. Lediglich dann, wenn das Folgefahrzeug, etwa ein Recycler, seine Maximalgeschwindigkeit erreicht hat, ist es vorteilhaft, wenn das Folgefahrzeug dies dem Führungsfahrzeug anzeigt, so dass dieses seine Geschwindigkeit nicht weiter erhöht, wenngleich dies nach den grundsätzlichen Gegebenheiten der jeweiligen Baustelle möglich wäre.

Somit ist bevorzugt das Quellenfahrzeug das Führungsfahrzeug und das Zielfahrzeug ist bevorzugt das Folgefahrzeug.

Es sei ausdrücklich klargestellt, dass das Folgefahrzeug nicht notwendigerweise dem Führungsfahrzeug nachläuft. Gerade in dem bevorzugten Beispiel eines Straßenfertigers als der Bodenbearbeitungsmaschine des ersten Fahrzeugs wird in der Regel das Folgefahrzeug dem Führungsfahrzeug in Arbeitsrichtung vorauseilen.

Die vorliegende Erfindung wird nachfolgend anhand der beiliegenden Zeichnungen näher erläutert. Es stellt dar:
- Fig. 1: eine grobschematische Seitenansicht eines Arbeitszugs der vorliegenden Erfindung mit den beiden Fahrzeugen des Arbeitszugs in Bezugsabstand,
- Fig. 2: die grobschematische Seitenansicht des Arbeitszugs von Fig. 1 mit vergrößertem Abstand zwischen den beiden Fahrzeugen des Arbeitszugs,
- Fig. 3: die grobschematische Seitenansicht des Arbeitszugs von Fig. 1 mit verkürztem Abstand zwischen den Fahrzeugen des Arbeitszugs,
- Fig. 4: die grobschematische Seitenansicht von Fig. 1 mit kuppenartig gekrümmtem Untergrund,
- Fig. 5: eine grobschematische Draufsicht des Arbeitszugs im Bezugszustand der Fig. 1 und
- Fig. 6: den Arbeitszug von Fig. 5 nach Einfahrt in eine Rechtskurve.

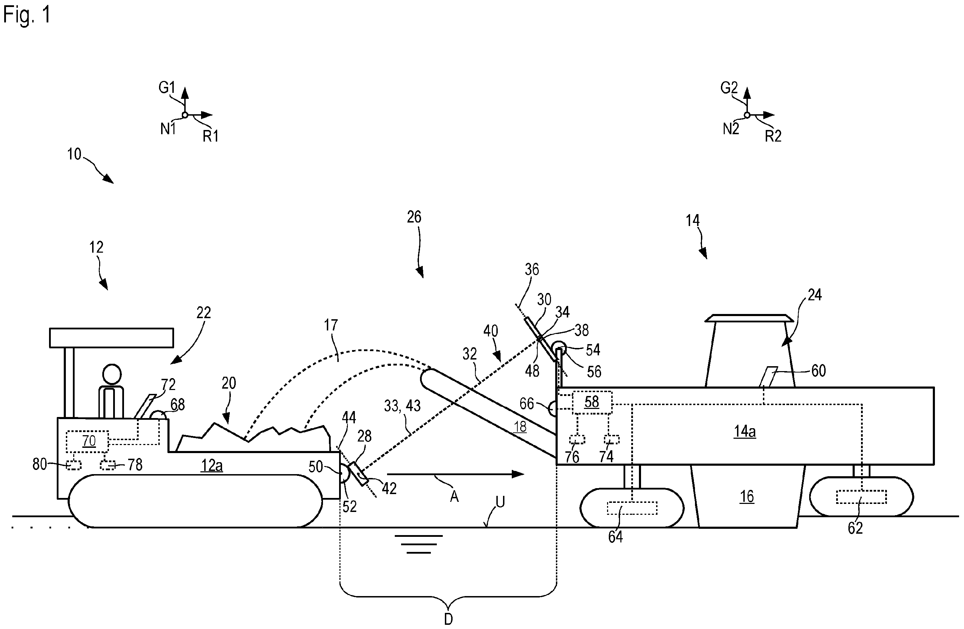

In den Fig. 1 bis 6 ist eine erfindungsgemäße Ausführungsform eines Arbeitszuges der vorliegenden Anmeldung allgemein mit 10 bezeichnet. Der Arbeitszug 10 umfasst ein erstes Fahrzeug 12 und ein weiteres Fahrzeug 14. Das erste Fahrzeug 12 ist beispielhaft ein Straßenfertiger, das weitere Fahrzeug 14 ist ein Recycler. Beide Fahrzeuge 12 und 14 sind daher Bodenbearbeitungsmaschinen.

Der Arbeitszug 10 bewegt sich in eine Arbeitsrichtung A, welche parallel zu den Zeichenebenen der Fig. 1 bis 4 orientiert ist. Da die Fahrzeuge 12 und 14 bodengebundene Fahrzeuge sind, ist die Arbeitsrichtung A auch parallel zum Untergrund U orientiert, auf welchem die Fahrzeuge 12 und 14 aufstehen.

Das weitere Fahrzeug 14, also beispielhaft der Recycler, trägt mit einer eine Fräswalze umfassenden Arbeitseinrichtung 16 Material vom Boden ab und bereitet abgetragenes Untergrundmaterial durch Beimischung von Bindemitteln so auf, dass rezykliertes Untergrundmaterial 17 über ein Förderband 18 vom weiteren Fahrzeug 14 in den Bunker 20 des ersten Fahrzeugs 12 gefördert wird.

Das im Bunker 20 vorhandene Material wird vom Straßenfertiger 12 zu einer festen Untergrundlage verbaut.

Der Recycler 14, welcher dem Fertiger 12 in Arbeitsrichtung A vorauseilt, arbeitet wie beschrieben destruktiv am Boden. Der Untergrund U wird vom Recycler 14 so für den Belagaufbau durch den Fertiger 12 vorbereitet. Der Fertiger 12 arbeitet konstruktiv und erstellt unmittelbar das vom Arbeitszug 10 gewünschte Arbeitsergebnis.

Da der Untergrund im Anwendungsbeispiel örtlich unterschiedliche Oberflächenebenen aufweist, ist als Bezugsuntergrund der in Arbeitsrichtung A zwischen den beiden Fahrzeugen 12 und 14 vorhandene Untergrund U heranzuziehen, der für beide Fahrzeuge 12 und 14 eine einheitliche Bezugsoberfläche bzw. Bezugsebene bildet.

Die Fahrzeuge 12 und 14 befinden sich in dem in Fig. 1 gezeigten Bezugszustand in Arbeitsrichtung A in einem Abstand D voneinander.

Da der Fertiger 12 unmittelbar das Arbeitsergebnis des Arbeitszuges 10 beeinflusst, während Änderungen in Betriebsparametern des Recyclers 14 das Arbeitsergebnis des Arbeitszuges 10 nur mittelbar beeinflussen, ist der Fertiger 12, also das erste Fahrzeug 12, im vorliegenden Beispiel Führungsfahrzeug, welches die Geschwindigkeit des Arbeitszuges 10 im Wesentlichen vorgibt. Der Recycler 14 ist dementsprechend Folgefahrzeug, dessen Fahrgeschwindigkeit in Arbeitsrichtung A sich innerhalb vorbestimmter Grenzen nach den Vorgaben des Führungsfahrzeugs 12 richtet.

Ein Fahrstand 22 des Fertigers 12 ist mit einer Bedienperson besetzt. Ein Fahrstand 24 des Recyclers 14 kann mit einer Bedienperson besetzt sein und ist dies aus Arbeitssicherheitsgründen in der Regel auch. Wie nachfolgend näher erläutert werden wird, kann jedoch wenigstens die Vorschubgeschwindigkeit des Recyclers 14 in Arbeitsrichtung A abhängig von der Vorschubgeschwindigkeit des Fertigers 12 und von einem zwischen den Fahrzeugen 12 und 14 einzuhaltenden Fahrzeugabstandsintervall automatisiert gesteuert werden.

Der Fahrzeugabstand D soll innerhalb vorgegebener Grenzen in einem vorbestimmten Soll-Abstandswertebereich liegen, so dass beispielsweise vom Förderband 18 abgeworfenes rezykliertes Untergrundmaterial 17 sicher nur den Bunker 20 des Fertigers 12 erreicht. Die Fördereinrichtung zur Förderung von rezykliertem Untergrundmaterial 17 vom Recycler 14 zum Fertiger 12 kann abweichend von der in den Fig. 1 bis 6 lediglich grobschematisch dargestellten Förderband-Förderung durch ein anderes Fördermittel erfolgen.

Zur Überwachung des Fahrzeugabstands D weist der Arbeitszug 10 eine Abstandsüberwachungseinrichtung 26 auf.

Diese umfasst eine Laserstrahlenquelle 28 und zwei längs der Nickachse N2 des Recyclers 14 mit Abstand voneinander angeordnete Sensoranordnungen 30. In den Fig. 1 bis 4 ist jeweils nur die dem Betrachter näher gelegene Sensoranordnung 30 dargestellt. Die dahinter liegende weitere Sensoranordnung 30 ist durch die Dargestellte verdeckt.

Die Laserstrahlenquelle 28 sendet einen Laserstrahl 32 aus, welche in dem in Fig. 1 dargestellten Bezugszustand die Sensoranordnung 30 nur in einem zentralen Erfassungsbereich 34 erreicht.

Die Sensoranordnung 30 erstreckt sich längs einer Sensorachse 36 und weist längs dieser Sensorachse 36 aufeinander folgend eine Mehrzahl von für das Licht des Laserstrahls 32 empfindlichen Sensorelementen auf. Beispielhaft in Fig. 1 dargestellt ist lediglich das im Erfassungsbereich 34 gelegene Sensorelement 38.

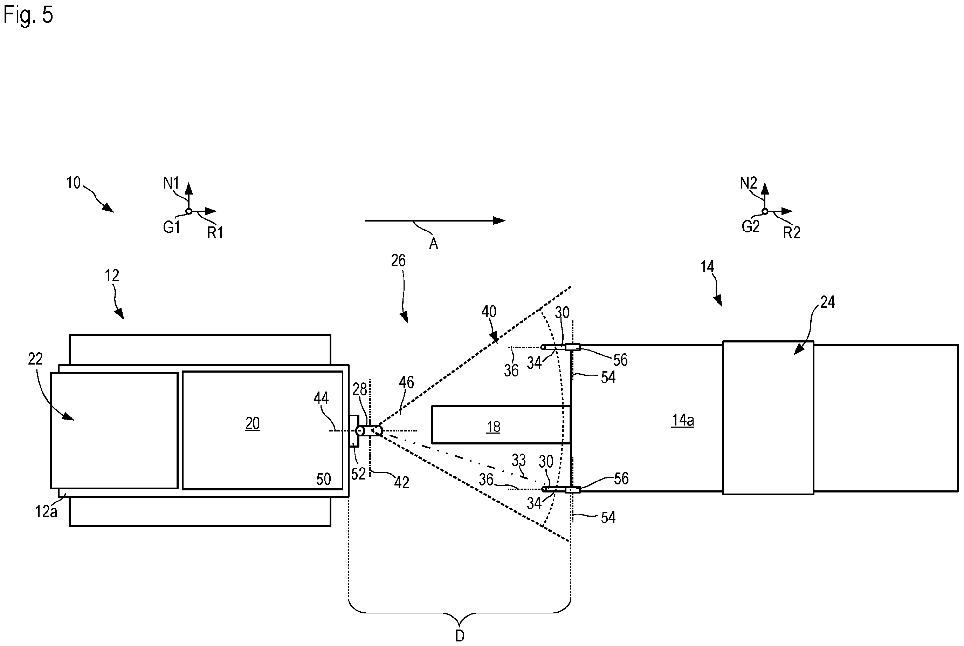

Die Laserstrahlenquelle 28 ist entweder ein Rotationslaser, welcher aus Arbeitssicherheitsgründen in nicht benötigten Abstrahlbereichen abgeschattet sein kann, oder ist eine Quelle eines oszillierenden Laserstrahls 32, welcher nur einen vorbestimmten Winkelbereich (s. zweiten Winkelbereich 46 in Fig. 5) ausleuchtet.

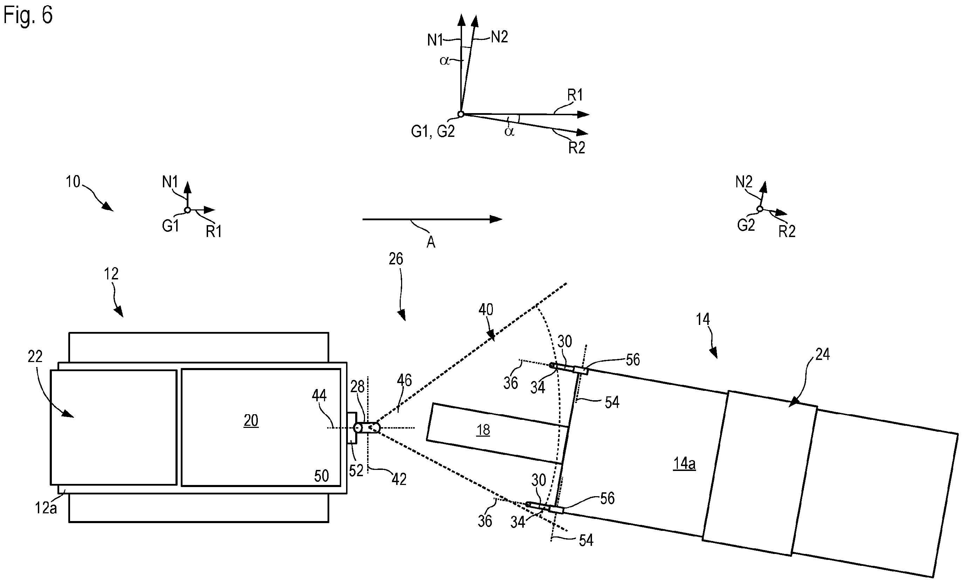

Ausgehend von der Laserstrahlenquelle 28 ist nur ein Strahlenraum 40 mit dem Laserstrahl 32 erfüllt, welcher um eine erste, zur Zeichenebene der Fig. 1 bis 4 orthogonale Strahlenraumachse 42 sich über einen sehr geringen ersten Winkelbereich 43 erstreckt, der im Wesentlichen nur der Dicke des Laserstrahls 32 entspricht. Um eine zweite Strahlenraumachse 44 überstreicht der Laserstrahl 32 einen, verglichen mit dem ersten Winkelbereich 43 um die erste Strahlenraumachse 42, sehr großen zweiten Winkelbereich 46 (siehe Fig. 5 und 6). Der zweite Winkelbereich 46 ist dabei so groß, dass die beiden Sensoranordnungen 30 des Recyclers 14 im gesamten Soll-Abstandswertebereich des Fahrzeugabstands D sicher vom Laserstrahl 32 erreicht werden. Auch hier ist die Darstellung des zweiten Winkelbereichs 46 in den Fig. 5 und 6 lediglich grobschematisch.

Die erste Strahlenraumachse 42 ist parallel zur Nickachse N1 des Fertigers 12. Die zweite Strahlenraumachse 44 ist parallel zu einer von der Gierachse G1 und der Rollachse R1 des Fertigers 12 aufgespannten Ebene.

Wie in Fig. 1 dargestellt ist, ist der Strahlenraum 40 um die erste Strahlenraumachse 42 bezüglich der Arbeitsrichtung A geneigt. Ebenso ist die Sensorachse 36 bezüglich einer bevorzugt zur ersten Strahlenraumachse 42 parallele Neigeachse 48 geneigt. Die Sensorachse 36 verläuft parallel zu einer von der Gierachse G2 und der Rollachse R2 des Recyclers 14 aufgespannten Ebene Die Neigung der Sensoranordnung 30 um die Neigeachse 48 ist bevorzugt derart, dass die Sensorachse 36 in dem in Fig. 1 gezeigten Bezugszustand orthogonal zu dem auf die Sensoranordnung 30 auftreffenden Laserstrahl 32 orientiert ist. Da der Laserstrahl 32 im dargestellten bevorzugten Ausführungsbeispiel orthogonal zur zweiten Strahlenraumachse 44 abgestrahlt wird, sind damit bevorzugt die Sensorachse 36 und die zweite Strahlenraumachse 44 im Ausführungsbeispiel zueinander parallel. Durch diese Anordnung ergibt sich eine große Sensitivität der Sensoranordnung 30 gegenüber einer Änderung des Fahrzeugabstands D bei gleichzeitig großem Sensierungsbereich.

In Fig. 5 ist eine Verbindungsgerade 33 zwischen der Laserlichtquelle 28 und dem Erfassungsbereich 34 der in Fig. 1 dargestellten Sensoranordnung 30 gezeigt. Die Darstellung der Verbindungsgerade 33 ist in den Seitenansichten der Fig. 1 bis 3 identisch mit der Darstellung des ersten Winkelbereichs 43 oder mit der Darstellung des Laserstrahls 32.

Bevorzugt verläuft die Sensorachse 36 im Bezugszustand parallel zu einer Schnittgeraden einer zur Verbindungsgeraden 33 orthogonalen Ebene einerseits und parallel zu einer die Rollachse R2 und die Gierachse G2 des weiteren Fahrzeugs 14 enthaltenden Ebene andererseits. Dann verläuft die Sensorachse orthogonal zur Verbindungsgeraden 33 und ist dennoch nur um die zur Nickachse N2 des weiteren Fahrzeugs 14 parallele Neigeachse 48 geneigt.

Zur Erleichterung der Einrichtung der Abstandsüberwachungseinrichtung 26 ist die Laserstrahlenquelle 28 am Maschinenkörper 12a des Fertigers 12 um eine fertigerseitige Einstellachse 50 durch einen, vorzugsweise elektromotorischen, Aktuator 52 verstellbar. Die fertigerseitige Einstellachse 50 ist im vorliegenden Beispiel parallel zur ersten Strahlenraumachse 42 und ist außerdem parallel zur Nickachse N1 des ersten Fahrzeugs 12 (Fertiger).

Ebenso ist zur Einrichtung der Sensoranordnung 30 diese um eine recyclerseitige Einstellachse 54 durch einen, vorzugsweise elektromotorischen, Aktuator 56 in ihrer Orientierung relativ zum Fahrzeugkörper 14a des weiteren Fahrzeugs 14 veränderlich. Die recyclerseitige Einstellachse 54 ist parallel zur Nickachse N2 des Recyclers 14 und ist ebenso parallel zur Neigeachse 48 der Sensoranordnung 30.

Zur Verdeutlichung der Orientierung des ersten Fahrzeugs 12 und des weiteren Fahrzeugs 14 im Bezugszustand ist über dem jeweiligen Fahrzeug ein kartesisches Dreibein gezeigt mit den jeweils fahrzeugeigenen Koordinatenachsen: Rollachse R, Nickachse N und Gierachse G. Die Achsen des ersten Fahrzeugs 12 tragen zusätzlich die Ziffer 1, die entsprechenden Koordinatenachsen des zweiten Fahrzeugs 14 tragen zusätzlich die Ziffer 2. Die Gierachsen G1 und G2 des ersten und des zweiten Fahrzeugs 12 bzw. 14 sind ebenso zueinander parallel wie die Nickachsen N1 und N2 sowie die Rollachsen R1 und R2.

Die Abstandsüberwachungseinrichtung 26 weist eine Steuereinrichtung 58 auf, welche beispielhaft an dem Recycler 14 angeordnet ist, das nicht nur Folgefahrzeug, sondern wegen der Anordnung der Sensoranordnung 30 daran auch Zielfahrzeug ist.

Abhängig davon, wo der Laserstrahl 32 auf die Sensoranordnung 30 auftrifft, kann die Steuereinrichtung 58 ein Abstandssignal mit einer Information über den Fahrzeugabstand D ausgeben. Das Abstandssignal kann in einem einfachen Fall über eine Datenleitung an einer Anzeigevorrichtung 60 im Fahrstand 24 des Recyclers 14 als Betriebsinformation angezeigt werden. Beispielsweise kann mit der Anzeigevorrichtung 60 einem Maschinenführer im Fahrstand 24 angezeigt werden, er solle den Recycler 14 in Arbeitsrichtung A beschleunigen, falls der Fahrzeugabstand D zu klein ist, verzögern, falls der Fahrzeugabstand D zu groß ist oder die Fahrzeuggeschwindigkeit unverändert belassen, falls der Fahrzeugabstand D passt.

Alternativ kann die Steuereinrichtung 58 auch das Abstandssignal an Fahrmotoren 62 und 64 des Recyclers 14 ausgeben und diese abhängig vom Erfassungszustand der Sensoranordnung 30 beschleunigen oder verzögern oder mit der vorhandenen Antriebsgeschwindigkeit weiterbetreiben. Der Ausgabe des Abstandssignals an die Fahrmotoren 62 und 64 steht eine Ausgabe an eine gesondert von der Steuereinrichtung 58 ausgebildete und vorgesehene, die Fahrmotoren 62 und 64 steuernde Motorsteuervorrichtung oder zentrale Steuervorrichtung gleich. Ebenso kann die Steuereinrichtung 58 die zentrale Steuervorrichtung des Recyclers 14 sein.

In dieser Weise funktioniert die einfachste Art der Abstandsüberwachung durch die Abstandsüberwachungseinrichtung 26. Besonders vorteilhaft ist, dass diese Art der Abstandsüberwachung des Fahrzeugabstands D ohne jegliche Datenkommunikation zwischen dem ersten Fahrzeug 12 und dem zweiten Fahrzeug 14 funktioniert. Somit kann eine Abstandssteuerung oder -regelung ausschließlich im Folgefahrzeug: Hier Recycler 14, realisiert sein, ohne dass es hierfür irgendeiner Rückmeldung an das Führungsfahrzeug, hier: Fertiger 12, bedarf.

Es reicht aus, die Geschwindigkeit des Recyclers 14 in Arbeitsrichtung A so zu manipulieren, dass der Erfassungsbereich 34 an der Sensoranordnung 30 in einer vorbestimmten sensoraxialen Erfassungszone liegt.

Gleichwohl soll eine solche Kommunikation nicht ausgeschlossen sein.

Wenngleich der Arbeitszug 10 mit der Abstandsüberwachungseinrichtung 26 in der oben bisher beschriebenen Weise funktioniert, kann dessen Funktionalität dennoch erweitert werden. So kann das Folge- und Zielfahrzeug 14 eine Sende/Empfangseinheit 66 aufweisen, welche ebenfalls über die Steuereinrichtung 58 steuerbar sein kann. Die Sende/Empfangseinheit 66 dient zum Datenaustausch mit einer Sende/- Empfangseinheit 68 am Quellen- und Führungsfahrzeug 12.

Am Fertiger 12 kann ebenfalls eine Steuereinrichtung 70 vorgesehen sein, durch welche die fertigerseitige Sende/Empfangseinheit 68 ansteuerbar ist. Außerdem kann die Steuereinrichtung 70 des Fertigers 12 eine Datenausgabeeinheit 72 aufweisen, mit welcher zu einer Bedienperson im Fahrstand 22 Daten ausgegeben, insbesondere angezeigt werden können.

Mit den Sende/Empfangseinheiten 66 und 68 können die beiden Fahrzeuge 12 und 14 Daten zwischen sich austauschen. Die Datenkommunikation kann unidirektional sein, ist jedoch bevorzugt bidirektional. Wenn sie unidirektional ist, erfolgt die Kommunikation bevorzugt vom Folgefahrzeug 14 zum Führungsfahrzeug 12.

Zur weiteren Erhöhung der Genauigkeit der Abstandsüberwachung kann der Recycler 14 einen Gierwinkelsensor 74 und einen Nickwinkelsensor 76 aufweisen. beide Sensoren sind datenübertragungsmäßig mit der Steuereinrichtung 58 des Fertigers 14 verbunden.

Ebenso kann der Fertiger 12 als das Führungsfahrzeug einen Gierwinkelsensor 78 und einen Nickwinkelsensor 80 aufweisen, welche ebenfalls jeweils mit ihrer Steuereinrichtung 70 datenübertragungsmäßig verbunden sind.

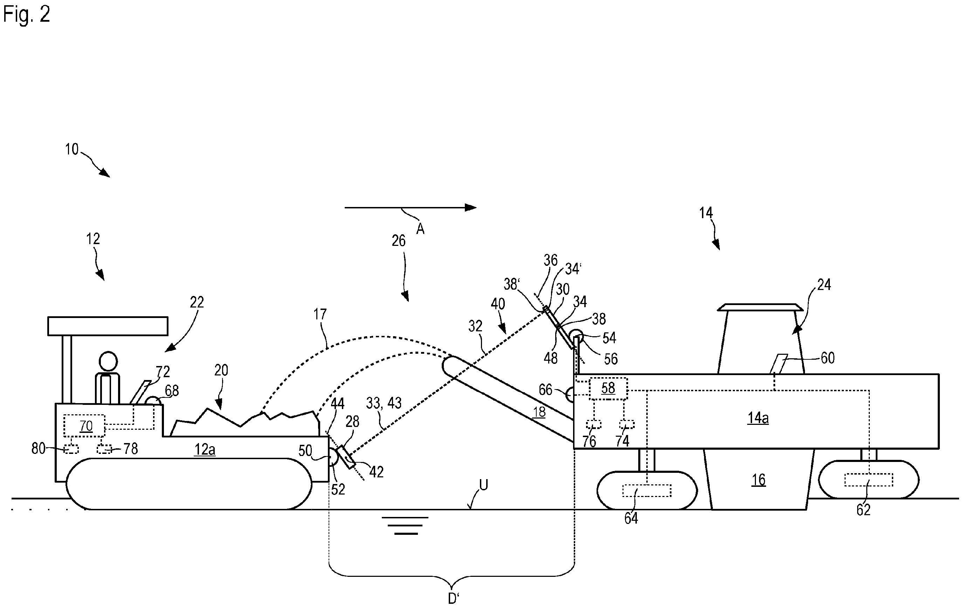

In Fig. 2 ist der Arbeitszug 10 von Fig. 1 mit vergrößertem Fahrzeugabstand D' dargestellt. Zu erkennen ist, dass sich der Erfassungsbereich 34' an der Sensoranordnung 30, in welchem der Laserstrahl 32 des Quellenfahrzeugs 12 erfasst wird, von dem ursprünglich zentralen Erfassungsbereich 34 zu dem bezüglich der Sensorachse 36 oberen Längsende hin verlagert hat. Damit strahlt das Laserlicht nicht mehr in das zentrale Sensorelement 38, sondern nur in ein oberes endseitiges Sensorelement 38' ein.

Ohne jegliche Kommunikation zwischen den beiden Fahrzeugen 12 und 14 kann so die Steuereinheit 58 lediglich anhand der relativen Verlagerung des Erfassungsbereichs 34 nach 34' erkennen, dass sich der Fahrzeugabstand D ausgehend vom Bezugsabstand der Fig. 1 verändert hat. In einem Datenspeicher der Steuereinrichtung 58 kann überdies hinterlegt sein, dass eine Verlagerung des Erfassungsbereichs 34 von einem sensoraxial zentralen Erfassungsbereich 34 zu einem oberen endseitigen Erfassungsbereich 34' eine Vergrößerung des Fahrzeugabstands bedeutet. Dementsprechend kann die Steuereinrichtung 58 an der Anzeigevorrichtung 60 im Fahrstand 24 des Recyclers 14 anzeigen, dass die Geschwindigkeit des Folgefahrzeugs 14 verringert werden soll oder/und kann unmittelbar die Fahrmotoren 62 und 64 im Sinne einer Verlangsamung der Fahrgeschwindigkeit des Recyclers 14 in Arbeitsrichtung A ansteuern.

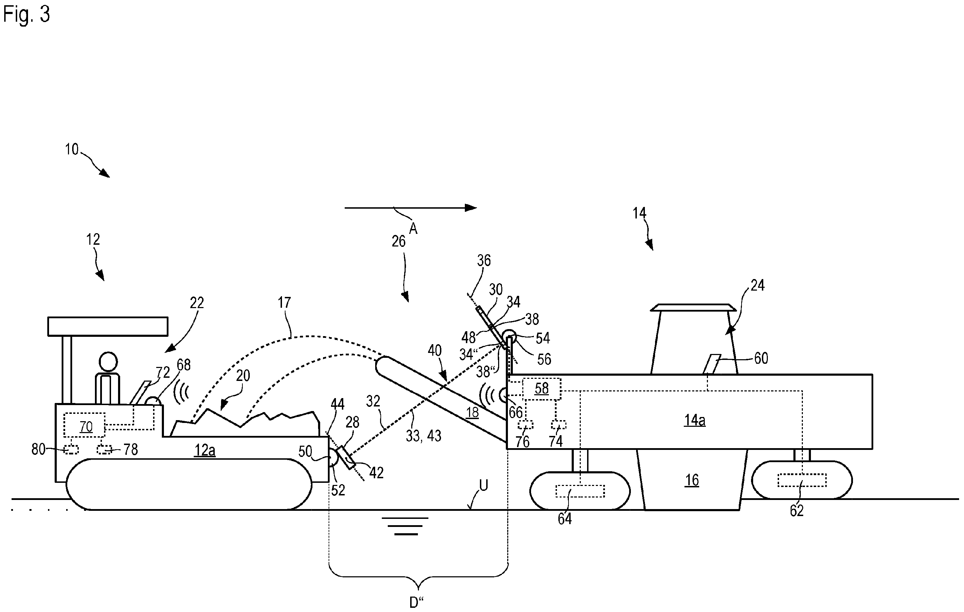

In Fig. 3 ist der Arbeitszug 10 von Fig. 1 mit verkürztem Fahrzeugabstand D" dargestellt. Der Erfassungsbereich 34", mit welchem der Laserstrahl 32 an der Sensoranordnung 30 empfangen wird, befindet sich nun am unteren sensoraxialen Ende der Sensoranordnung 30. Ein unteres endseitiges Sensorelement 38" empfängt nun das Laserlicht, während die übrigen Sensorelemente der Sensoranordnung 30 vom Laserlicht der Laserstrahlenquelle 28 nicht erreicht werden und in einem Dunkelbereich liegen.

Entsprechend der obigen Erläuterung zur Fig. 2 erkennt die Steuereinrichtung 58 aus der Lage des Erfassungsbereichs 34", dass der Abstand D" zwischen den Fahrzeugen 12 und 14 sich verringert hat oder sogar einen unteren Grenzwert erreicht hat. Entsprechend kann die Steuereinrichtung 58 an der Anzeigevorrichtung 60 im Fahrstand 24 ein Signal ausgeben, welches einen Fahrzeugführer im Fahrstand 24 zur Beschleunigung des Recyclers 14 in der Arbeitsrichtung A auffordert oder/und kann die Steuereinrichtung 58 die Fahrmotoren 62 und 64 des Recyclers 14 im Sinne einer Geschwindigkeitserhöhung ansteuern.

Dann, wenn der Recycler 14 bereits seine maximale Fahrgeschwindigkeit in Arbeitsrichtung A erreicht hat, die auch die Vorschubgeschwindigkeit der Arbeitseinrichtung 16 ist, ist eine weitere Beschleunigung des Recyclers 14 technisch nicht mehr möglich. In diesem Falle überträgt die Steuereinrichtung 58 über die Sende/Empfangseinheit 66 ein entsprechendes Signal an die Sende/Empfangseinheit 68 des Fertigers 12, wo die dortige Steuereinrichtung 70 dem Maschinenführer im Fahrstand 22 an der Datenausgabeeinheit 72 anzeigt, dass der Fertiger 12 nicht noch schneller fertigen darf oder seine Arbeitsgeschwindigkeit in Arbeitsrichtung A sogar verringern sollte. Da der Recycler 14 Folgefahrzeug ist und seine Geschwindigkeit in der Arbeitsrichtung A nach der Geschwindigkeit des Fertigers 12 in der Arbeitsrichtung A richtet, kann dann, wenn der Recycler 14 seine maximale Geschwindigkeit in Arbeitsrichtung A erreicht hat und sich der Abstand D zwischen den Fahrzeugen 12 und 14 weiter verkürzt, dieser Abstand nur noch durch Steuerungseingriffe am Fertiger 12 wieder vergrößert werden.

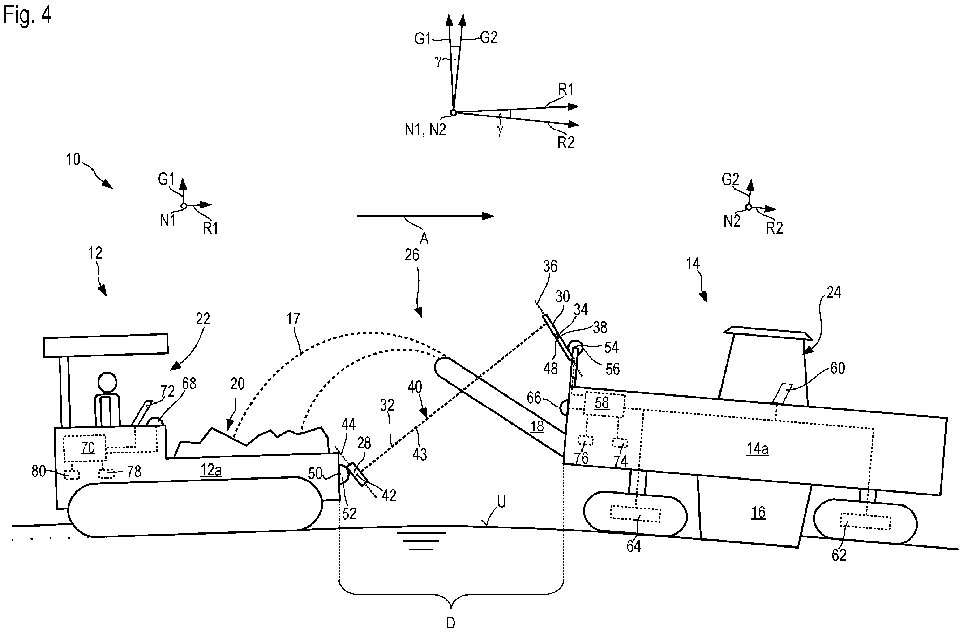

In Fig. 4 ist der Arbeitszug 12 von Fig. 1 beim Überfahren einer Geländekuppel dargestellt. Der Untergrund U ist um eine zur Zeichenebene der Fig. 4 orthogonale Krümmungsachse gekrümmt.

Die Darstellung von Fig. 4 zeigt, dass die Änderung des Erfassungszustands der Sensoranordnung 36 einer Vergrößerung des Fahrzeugabstands D entspricht, obwohl der Fahrzeugabstand D sich tatsächlich nicht verändert hat.

Eine in der Mitte oben von Fig. 4 dargestellte Übereinanderanordnung der beiden fahrzeugspezifischen Koordinatensysteme zeigt, dass die Nickachsen N1 und N2 der Fahrzeuge 12 und 14 nach wie vor parallel zueinander sind, jedoch die Gierachsen und die Rollachsen relativ zueinander um eine nickachsen- bzw. krümmungsachsenparallele Drehachse um den Winkel γ zueinander verdreht angeordnet sind.

Mit dem Nickwinkelsensor 76 kann die Steuereinrichtung 58 am Recycler 14 erfassen, dass sich der Nickwinkel des Recyclers 14 in einem absoluten Koordinatensystem geändert hat. Anhand der der Steuereinrichtung 58 bekannten Fahrgeschwindigkeit des Recyclers 14 in Arbeitsrichtung A kann die Steuereinrichtung 58 somit ermitteln, wann auch der Fertiger 12 die gleiche Orientierungsänderung um dessen Nickachse N1 nachvollziehen wird. Somit kann die Steuereinrichtung 58 aufgrund eines Nickwinkelsignals vom Nickwinkelsensor 76 erkennen, dass die Änderung des Erfassungszustands an der Sensoranordnung 30 nicht auf eine Änderung des Fahrzeugabstands D zurückgeht, sondern auf eine Änderung der Relativorientierung der beiden Fahrzeuge 12 und 14 um eine nickachsenparallele Änderungsachse, wobei die Steuereinrichtung 58 durch Zeitmessung und durch Messung der Geschwindigkeit des Recyclers 14 vorausberechnen kann, wann die Koordinatensysteme der beiden Fahrzeuge 12 und 14 wieder drei zueinander parallele Raumachsen aufweisen. Somit kann alleine die Steuereinrichtung 58 des Recyclers 14 ohne Datenaustausch mit dem Fertiger 12 beurteilen, ob eine Verlagerung des Erfassungsbereichs 34 längs der Sensorachse 36 auf eine Abstandsänderung oder auf eine Geländeformation zurückgeht. Dies beruht auf dem Umstand, dass beide Fahrzeuge 12 und 14 mit zeitlichem Versatz nacheinander die gleiche Strecke durchfahren.

Es kann jedoch zusätzlich auch der Nickwinkelsensor 80 am Fertiger 12 herangezogen werden, wobei dessen Nickwinkelsignal über die Sende/Empfangseinheit 68 zur Sende/Empfangseinheit 66 des Recyclers 14 übertragen werden kann. Aus den Nickwinkelinformationen beider Fahrzeuge 12 und 14 kann die Steuereinrichtung 58 einen Relativnickwinkel der beiden Fahrzeuge 12 und 14 zueinander berechnen und so unmittelbar ermitteln, ob die beiden Koordinatensysteme um ihre Nickachsen N1 bzw. N2 relativ zueinander verdreht sind oder nicht. Somit kann eine Bewertung des Erfassungsergebnisses der Sensoranordnung 30 mit noch größerer Genauigkeit erfolgen.

In Fig. 5 ist der Arbeitszug 10 von Fig. 1 von oben in der Draufsicht dargestellt. Zu erkennen ist hier die zweite Sensoranordnung 30, welche jedoch der bisher erläuterten Sensoranordnung 30 vollständig entspricht. Gleiche und funktionsgleiche Bauteile und Bauteilabschnitte wie in der bereits erläuterten Sensoranordnung 30, das ist in Fig. 5 die untere Sensoranordnung 30, sind in den Fig. 5 und 6 auch der zweiten, oberen Sensoranordnung zugeordnet. Die für die Sensoranordnung 30 gegebenen Erläuterungen gelten für beide Sensoranordnungen 30.

Eine strichlinierte Sektorlinie zeigt die Erfassungsbereiche 34 an beiden Sensoranordnungen 30 bei Geradeausfahrt an.

Da eine Fräswalze im Recycler 14 in der Regel nicht symmetrisch in Nickachsenrichtung am Recycler angeordnet ist, können die beiden Fahrzeuge 12 und 14 in Richtung ihrer im Bezugszustand parallelen Rollachsen R1 bzw. R2 einen Versatz in Nickachsenrichtung aufweisen.

Die Fig. 5 zeigt, dass bei Geradeausfahrt die Erfassungsbereiche 34 an beiden Sensoreinrichtungen 30 etwa im gleichen sensoraxialen Bereich liegen.

In Fig. 6 ist beispielhaft der Beginn einer Kurvenfahrt des Arbeitszuges längs einer Rechtskurve dargestellt. Der Recycler 14 hat bereits in die Rechtskurve eingelenkt, der Fertiger 12 noch nicht. Dementsprechend haben sich bei unverändertem Fahrzeugabstand zwischen den Fahrzeugen 12 und 14 die Erfassungsbereiche der beiden Sensoranordnungen 30 längs der jeweiligen Sensorachsen 36 verlagert. Die Verlagerung erfolgt wegen der Neigung des Strahlenraums 40 um die zur Nickachse N1 des Fertigers 12 parallele erste Strahlenraumachse 42 bei unterschiedlichen Gierwinkeln der Fahrzeuge 12 und 14 gegensinnig. Im dargestellten Beispiel ist der Erfassungsbereich 34 der in Fig. 6 oberen Sensoranordnung 30 ausgehend vom Zustand von Fig. 5 zum oberen Längsende der Sensoranordnung 30 hin gewandert, das ist also in Richtung des Erfassungsbereichs 34' von Fig. 2. Ebenso ist der Erfassungsbereich 34 der in Fig. 6 unteren Sensoranordnung 30 ausgehend vom Zustand von Fig. 5 zum unteren Längsende dieser Sensoranordnung 30 hin gewandert, das ist in Richtung zum Erfassungsbereich 34" von Fig. 3 hin.

Ein solcher Erfassungszustand kann grundsätzlich zweierlei Ursachen haben: Zum einen die in Fig. 6 gezeigte Kurvenfahrt und zum anderen eine Geländeformation, bei welcher die beiden Fahrzeuge 12 und 14 um eine zu ihren beiden zunächst parallelen Rollachsen R1, R2 parallele Achse relativ zueinander verdreht sind.

Durch den Gierwinkelsensor 74 im Recycler 14 kann jedoch aufgrund des von diesem gelieferten Gierwinkelsignals die Steuereinrichtung 58 ermitteln, dass der sich gegenüber jenem von Fig. 5 geänderte Erfassungszustand auf einer Änderung des Gierwinkels des Recyclers 14 beruht und nicht auf einer Abstandsänderung oder auf einer Verdrehung um die Rollachse. Anstelle eines oder zusätzlich zu einem Gierwinkelsensor 74 bzw. 78 kann ein Rollwinkelsensor an einem oder beiden Fahrzeugen 12 und 14 vorgesehen sein. Da jedoch die Kurvenfahrt eine wesentlich häufigere Betriebssituation darstellt als eine Fahrt um eine in Arbeitsrichtung verwundene Fahrbahn, ist die Anordnung eines Gierwinkelsensors bevorzugt.

Anstelle von Gierwinkel- und Rollwinkelsensoren können in ihrer Aussagekraft gleichwertige Informationen alternativ oder zusätzlich durch Erfassung von Maschinendaten über einen gemeinsamen Zeitraum hinweg und Auswertung derselben erhalten werden, etwa durch Erfassung von Lenkwinkeln, von Fahrgeschwindigkeit und Zeit oder/und von Fahrstrecke, von der Stellung einzelner Hubsäulen, durch welche der Abstand des jeweiligen Fahrzeugkörpers relativ zu dem mit der Hubsäule verbundenen Fahrwerk und damit mit der Aufstandsoberfläche des Bodenbereichs, auf welchem das jeweilige Fahrwerk aufsteht, ermittelbar ist.

Wäre an dem Recycler 14 nur eine Sensoranordnung 30 angeordnet, wäre von der Steuereinrichtung 58 bei Beginn einer Kurvenfahrt nur eine Änderung des Erfassungszustands erfassbar, die ohne zusätzliche Information von einer Abstandsänderung nicht zu unterscheiden ist. Durch die zweite Sensoranordnung mit Abstand längs der Nickachse N2 von der ersten auf unterschiedlichen Seiten einer zur Rollachse und zur Gierachse des Recyclers 14 parallelen Ebene, welche im Bezugszustand des Arbeitszuges 10 die Laserstrahlenquelle 28 durchsetzt, kann jedoch die oben beschriebene Gegensinnigkeit der Änderung des Erfassungszustands bei Kurvenfahrt provoziert und somit die Kurvenfahrt an den Sensoranordnungen 30 erkannt werden. Noch genauer kann die Kurvenfahrt durch zusätzliche Information des Gierwinkelsensors 74 erkannt werden.

Wie oben bereits im Zusammenhang mit dem Überfahren der Geländekuppe (siehe Fig. 4) erläutert wurde, kann auch hier eine Gierwinkelinformation des fertigerseitigen Gierwinkelsensors 78 vom Fertiger 12 an den Recycler 14 übertragen werden und dort von der Steuereinrichtung 58 zusammen mit der Gierwinkelinformation des Gierwinkelsensors 74 in eine Relativgierwinkelinformation der beiden Fahrzeuge 12 und 14 relativ zueinander umgerechnet werden. Dies liefert die genaueste Möglichkeit, den Erfassungszustand der wenigstens einen Sensoranordnung 30 hinsichtlich einer Änderung des Fahrzeugabstands D zu beurteilen.

## Patentansprüche

1. Arbeitszug (10), umfassend eine selbstfahrende Bodenbearbeitungsmaschine (12) als ein erstes Fahrzeug (12) und wenigstens ein weiteres selbstfahrendes Fahrzeug (14), wobei die Fahrzeuge (12, 14) des Arbeitszuges (10) dazu ausgebildet sind, sich während eines bestimmungsgemäßen Arbeitsbetriebs mit einem in einem vorbestimmten Soll-Abstandswertebereich gelegenen Soll-Abstand hintereinander in eine gemeinsame Arbeitsrichtung (A) zu bewegen, wobei der Arbeitszug (10) eine Abstandsüberwachungseinrichtung (26) aufweist, welche nach Maßgabe eines von einem tatsächlichen Ist-Abstand (D, D', D") der Fahrzeuge (12, 14) abhängigen Erfassungszustands der Abstandsüberwachungseinrichtung (26) ein Abstandssignal ausgibt, das eine Information über den Fahrzeugabstand (D, D', D") enthält, wobei die Abstandsüberwachungseinrichtung (26) eine elektromagnetische Strahlung (32) aussendende Strahlenquelle (28) und eine für die elektromagnetische Strahlung (32) der Strahlenquelle (28) sensitive Sensoranordnung (30) aufweist, wobei ein Fahrzeug (12) aus dem ersten und dem weiteren Fahrzeug (12, 14) als Quellenfahrzeug (12) die Strahlenquelle (28) mitführt, wobei dann, wenn sich der Arbeitszug (10) in einem vorbestimmten Bezugszustand, d. h. auf einem ebenen horizontalen Untergrund (U) mit in einem vorbestimmten Bezugsabstand (D) voneinander entfernt arbeitsbetriebsbereit angeordneten Fahrzeugen (12, 14), befindet, die Strahlenquelle (28) in Richtung zu dem jeweils anderen Fahrzeug (14) aus dem ersten und dem weiteren Fahrzeug (12, 14) als einem Zielfahrzeug (14) eine elektromagnetische Strahlung (32) derart gerichtet abstrahlt, dass die elektromagnetische Strahlung (32) zur Abstandsüberwachung nur in einem Strahlenraum (40) vorhanden ist, welcher sich über einen ersten Winkelbereich (43) um eine erste Strahlenraumachse (42) sowie über einen zweiten Winkelbereich (46) um eine mit der ersten Strahlenraumachse (42) einen Winkel einschließende zweite Strahlenraumachse (44) erstreckt, wobei der zweite Winkelbereich (46) betragsmäßig gleich groß ist wie oder größer ist als der erste Winkelbereich (43) und wobei der Strahlenraum (40) bezüglich der Arbeitsrichtung (A) um die erste Strahlenraumachse (42) geneigt ist,
**dadurch gekennzeichnet, dass** die Sensoranordnung (30) sich längs einer Sensorachse (36) erstreckt und am Zielfahrzeug (14) zur Mitführung durch dieses angeordnet ist, wobei - bei Betrachtung des Arbeitszuges (10) im Bezugszustand - ein vorbestimmter sensoraxialer Bezugserfassungsbereich (34) an der Sensoranordnung (30) von der Strahlenquelle (28) bestrahlt wird, und wobei die Sensorachse (36) relativ zu einer Verbindungsgeraden (33) zwischen dem Erfassungsbereich (34) und der Strahlenquelle (28) um eine zur ersten Strahlenraumachse (42) parallele Neigeachse (48) geneigt angeordnet ist, so dass eine Veränderung des Fahrzeugabstands (D, D', D") zu einer Lageänderung des von der Strahlenquelle (28) bestrahlten Erfassungsbereichs (34) an der Sensoranordnung (30) längs der Sensorachse (36) und somit zu einer Änderung des Erfassungszustands der Sensoranordnung (30) führt.

2. Arbeitszug (10) nach Anspruch 1,
**dadurch gekennzeichnet, dass** das Zielfahrzeug (14) wenigstens zwei sich längs einer Sensorachse (36) erstreckende Sensoranordnungen (30) aufweist, welche Sensorachsen (36) - bei Betrachtung des Arbeitszuges (10) im Bezugszustand - jeweils relativ zu einer Verbindungsgeraden (33) zwischen dem Erfassungsbereich (34) und der Strahlenquelle (28) um eine zur ersten Strahlenraumachse (42) parallele Neigeachse (48) geneigt angeordnet sind, wobei die wenigstens zwei Sensoranordnungen (30) in Umfangsrichtung um die zweite Strahlenraumachse (44) mit Abstand voneinander angeordnet sind.

3. Arbeitszug (10) nach Anspruch 1 oder 2,
**dadurch gekennzeichnet, dass** die Strahlenquelle (28) eine Laserstrahlenquelle (28) ist, welche Laserlicht als die elektromagnetische Strahlung (32) ausstrahlt.

4. Arbeitszug (10) nach Anspruch 3,
**dadurch gekennzeichnet, dass** die Strahlenquelle (28) einen um die zweite Strahlenraumachse (44) oszillierenden oder rotierenden Laserstrahl (32) ausstrah lt.

5. Arbeitszug (10) nach einem der vorhergehenden Ansprüche,
**dadurch gekennzeichnet, dass** die erste Strahlenraumachse (42) zur Nickachse (N1) des Quellenfahrzeugs (12) parallel ist oder/und dass die zweite Strahlenraumachse (44) in einer oder parallel zu einer aus Gierachse (G1) und Rollachse (R1) des Quellenfahrzeugs (12) aufgespannten Ebene gelegen ist.

6. Arbeitszug (10) nach Anspruch 5,
**dadurch gekennzeichnet, dass** die Sensorachse (36) wenigstens einer Sensoranordnung (30) in einem kartesischen Fahrzeugkoordinatensystem aus Roll-, Nick- und Gierachse eine größere Erstreckungskomponente parallel zu der aus Gierachse (G2) und Rollachse (R2) des Zielfahrzeugs (14) aufgespannten Ebene als orthogonal dazu aufweist.

7. Arbeitszug (10) nach einem der vorhergehenden Ansprüche,
**dadurch gekennzeichnet, dass** das Quellenfahrzeug (12) oder/und das Zielfahrzeug (14) einen Aktuator (52, 56) aufweist, welcher bewegungsübertragend mit der Strahlenquelle (28) bzw. mit der Sensoranordnung (30) gekoppelt ist, so dass die Strahlenquelle (28) oder/und die wenigstens eine Sensoranordnung (30) an dem sie jeweils tragenden Fahrzeug (12, 14)) um eine zur ersten Strahlenraumachse (42) parallele Einstellachse (50, 54) relativ zum jeweiligen Fahrzeugkörper (12a, 14a) aktuatorisch verlagerbar aufgenommen ist bzw. sind.

8. Arbeitszug (10) nach einem der vorhergehenden Ansprüche,
**dadurch gekennzeichnet, dass** die Abstandsüberwachungseinrichtung (26) eine Steuereinrichtung (58, 70) aufweist und
- dass das erste oder/und das weitere Fahrzeug (12, 14) eine Gierwinkel-Erfassungsvorrichtung (74, 78) aufweist, welche einen Gierwinkel des jeweiligen Fahrzeugs (12, 14) erfasst, wobei wenigstens eine Gierwinkel-Erfassungsvorrichtung (74, 78) ein Gierwinkelsignal, welches eine Information über den Gierwinkel wenigstens eines Fahrzeugs (12, 14) enthält, an die Steuereinrichtung (58, 70) überträgt, wobei die Steuereinrichtung (58, 70) das Abstandsignal nach Maßgabe des Erfassungszustands der wenigstens einen Sensoranordnung (30) und nach Maßgabe des Gierwinkelsignals der wenigstens einen Gierwinkel-Erfassungsvorrichtung (74, 78) erzeugt,
oder/und
- dass das erste oder/und das weitere Fahrzeug (12, 14) eine Nickwinkel-Erfassungsvorrichtung (76, 80) aufweist, welche einen Nickwinkel des jeweiligen Fahrzeugs (12, 14) erfasst, wobei wenigstens eine Nickwinkel-Erfassungsvorrichtung (76, 80) ein Nickwinkelsignal, welches eine Information über den Nickwinkel wenigstens eines Fahrzeugs (12, 14) enthält, an die Steuereinrichtung (58, 70) überträgt, wobei die Steuereinrichtung (58, 70) das Abstandsignal nach Maßgabe des Erfassungszustands der wenigstens einen Sensoranordnung (30) und nach Maßgabe des Nickwinkelsignals der wenigstens einen Nickwinkel-Erfassungsvorrichtung (76, 80) erzeugt.

9. Arbeitszug (10) nach Anspruch 8,
**dadurch gekennzeichnet, dass** das Gierwinkelsignal eine Information über den Relativgierwinkel zwischen Quellen- und Zielfahrzeug (12, 14) enthält oder/und dass das Nickwinkelsignal eine Information über den Relativnickwinkel zwischen Quellen- und Zielfahrzeug (12, 14) enthält.

10. Arbeitszug (10) nach einem der vorhergehenden Ansprüche,
**dadurch gekennzeichnet, dass** das Abstandssignal eine Betriebsinformation zum Betrieb eines Antriebsmotors (62, 64) oder/und einer Fahrzeugbremse wenigstens eines der Fahrzeuge (12, 14) enthält.

11. Arbeitszug (10) nach einem der vorhergehenden Ansprüche,
**dadurch gekennzeichnet, dass** die Fahrzeuge (12, 14) des Arbeitszugs (10) durch eine Datenkommunikationsverbindung in wenigstens einer Datenübertragungsrichtung in Datenkommunikationsverbindung miteinander stehen.

12. Arbeitszug (10) nach einem der vorhergehenden Ansprüche,
**dadurch gekennzeichnet, dass** ein Fahrzeug (12, 14) aus Quellenfahrzeug (12) und Zielfahrzeug (14) als Führungsfahrzeug (12) eine Bewegungsgeschwindigkeit längs der Arbeitsrichtung (A) vorgibt und dass an das jeweils andere Fahrzeug (14) aus Quellenfahrzeug (12) und Zielfahrzeug (14) als Folgefahrzeug (14) das Abstandssignal ausgegeben wird.

13. Arbeitszug (10) nach Anspruch 12,
**dadurch gekennzeichnet, dass** das Folgefahrzeug (14) dazu ausgebildet ist, während eines bestimmungsgemäßen Arbeitsbetriebs dem Führungsfahrzeug (12) anzuzeigen, dass ein Betriebsparameter sich seinem Parametergrenzwert über einen vorbestimmten Warnschwellenwert hinaus angenähert hat oder/und seinen Parametergrenzwert erreicht hat.

14. Arbeitszug (10) nach Anspruch 12 oder 13,
**dadurch gekennzeichnet, dass** das erste Fahrzeug (12) eine Material auf dem Untergrund (U) auftragende Bodenbearbeitungsmaschine (12) ist und das weitere Fahrzeug (14) ein Lieferfahrzeug (14) ist, welches zum Auftrag bestimmtes Material an die Bodenbearbeitungsmaschine (12) übergibt, wobei die Bodenbearbeitungsmaschine (12) das Führungsfahrzeug (12) ist und das Lieferfahrzeug (14) das Folgefahrzeug (14) ist.

## Claims

1. A working combination (10) encompassing a self-propelled earth working machine (12) constituting a first vehicle (12) and at least one further self-propelled vehicle (14), the vehicles (12, 14) of the working combination (10) being embodied to move, during working operation as intended, one behind another in a common working direction (A) with a setpoint spacing that is within a predetermined setpoint spacing value range; the working combination (10) having a spacing monitoring device (26) that, on the basis of a detection state of the spacing monitoring device (26) which depends on an actual true spacing (D, D', D") of the vehicles (12, 14), outputs a spacing signal that contains information regarding the vehicle spacing (D, D', D"); the spacing monitoring device (26) comprising a beam source (28) emitting electromagnetic radiation (32) and a sensor arrangement (30) sensitive to the electromagnetic radiation (32) of the beam source (28); one vehicle (12) from among the first and the further vehicle (12, 14), constituting a source vehicle (12), carrying the beam source (28); when the working combination (10) is in a predetermined reference state, i.e. on a flat horizontal substrate (U) with vehicles (12, 14) arranged in readiness for working operation with a predetermined reference spacing (D) from one another, the beam source (28) radiating, toward the respective other vehicle (14) from among the first and the further vehicle (12, 14) constituting a target vehicle (14), an electromagnetic radiation (32) directed in such a way that the electromagnetic radiation (32) for spacing monitoring is present only in a beam space (40) that extends over a first angular region (43) around a first beam space axis (42) and over a second angular region (46) around a second beam space axis (44) that encloses an angle with the first beam space axis (42); the second angular region (46) being of equal magnitude to, or of greater magnitude than, the first angular region (43); and the beam space (40) being inclined around the first beam space axis (42) with reference to the working direction (A),
**characterized in that** the sensor arrangement (30) extends along a sensor axis (36) and is arranged on the target vehicle (14) to be carried by it; when considering the working combination (10) in the reference state, a predetermined sensor-axial reference detection region (34) on the sensor arrangement (30) being irradiated by the beam source (28); and the sensor axis (36) being arranged with an inclination around an inclination axis (48) parallel to the first beam space axis (42), relative to a connecting line (33) between the detection region (34) and the beam source (28), so that a change in the vehicle spacing (D, D', D") results in a change, along the sensor axis (36), in the position of the detection region (34) on the sensor arrangement (30) which is irradiated by the beam source (28), and thus in a change in the detection state of the sensor arrangement (30).

2. The working combination (10) according to Claim 1,
**characterized in that** the target vehicle (14) comprises at least two sensor arrangements (30) that extend along a sensor axis (36), which sensor axes (36), when considering the working combination (10) in the reference state, are each arranged with an inclination, relative to a connecting line (33) between the detection region (34) and the beam source (28), around an inclination axis (48) parallel to the first beam space axis (42); the at least two sensor arrangements (30) being arranged with a spacing from one another in a circumferential direction around the second beam space axis (44).

3. The working combination (10) according to Claim 1 or 2,
**characterized in that** the beam source (28) is a laser beam source (28) that emits laser light as the electromagnetic radiation (32).

4. The working combination (10) according to Claim 3,
**characterized in that** the beam source (28) emits a laser beam (32) that oscillates or rotates around the second beam space axis (44).

5. The working combination (10) according to one of the preceding claims,
**characterized in that** the first beam space axis (42) is parallel to the pitch axis (N1) of the source vehicle (12); and/or the second beam space axis (44) is located in, or parallel to, a plane spanned by the yaw axis (G1) and the roll axis (R1) of the source vehicle (12).

6. The working combination (10) according to Claim 5,
**characterized in that** the sensor axis (36) of at least one sensor arrangement (30) has, in a Cartesian vehicle coordinate system made up of a roll axis, a pitch axis, and a yaw axis, a greater extent component parallel to the plane spanned by the yaw axis (G2) and the roll axis (R2) of the target vehicle (14) than orthogonally thereto.

7. The working combination (10) according to one of the preceding claims,
**characterized in that** the source vehicle (12) and/or the target vehicle (14) comprises an actuator (52, 56) that is coupled motion-transferringly respectively to the beam source (28) and to the sensor arrangement (30), so that the beam source (28) and/or the at least one sensor arrangement (30) is or are received, on the respective vehicle (12, 14) carrying them, displaceably in actuator-based fashion relative to the respective vehicle body (12a, 14a), around an adjustment axis (50, 54) parallel to the first beam space axis (42).

8. The working combination (10) according to one of the preceding claims,
**characterized in that** the spacing monitoring device (26) comprises a control device (58. 70); and
- the first and/or the further vehicle (12, 14) comprises a yaw angle detection apparatus (74, 78) that detects a yaw angle of the respective vehicle (12, 14), at least one yaw angle detection apparatus (74, 78) transferring to the control device (58, 70) a yaw angle signal that contains information regarding the yaw angle of at least one vehicle (12, 14); the control device (58, 70) generating the spacing signal in accordance with the detection state of the at least one sensor arrangement (30) and in accordance with the yaw angle signal of the at least one yaw angle detection apparatus (74, 78),
and/or
- the first and/or the further vehicle (12, 14) comprises a pitch angle detection apparatus (76, 80) that detects a pitch angle of the respective vehicle (12, 14), at least one pitch angle detection apparatus (76, 80) transferring to the control device (58, 70) a pitch angle signal that contains information regarding the pitch angle of at least one vehicle (12, 14); the control device (58, 70) generating the spacing signal in accordance with the detection state of the at least one sensor arrangement (30) and in accordance with the pitch angle signal of the at least one pitch angle detection apparatus (76, 80).

9. The working combination (10) according to Claim 8,
**characterized in that** the yaw angle signal contains information regarding the relative yaw angle between the source and the target vehicle (12, 14); and/or the pitch angle signal contains information regarding the relative pitch angle between the source and the target vehicle (12, 14).

10. The working combination (10) according to one of the preceding claims,
**characterized in that** the spacing signal contains operating information for operating a drive motor (62, 64) and/or a vehicle brake of at least one of the vehicles (12, 14).

11. The working combination (10) according to one of the preceding claims,
**characterized in that** the vehicles (12, 14) of the working combination (10) are in data communication with one another in at least one data transfer direction by way of a data communication connection.

12. The working combination (10) according to one of the preceding claims,
**characterized in that** one vehicle (12, 14) from among the source vehicle (12) and target vehicle (14), constituting a leader vehicle (12), defines a movement speed in the working direction (A); and the spacing signal is outputted to the respective other vehicle (14) from among the source vehicle (12) and target vehicle (14), constituting a follower vehicle (14).

13. The working combination (10) according to Claim 12,
**characterized in that** the follower vehicle (14) is embodied to indicate to the leader vehicle (12), during working operation as intended, that an operating parameter has exceeded a predetermined warning threshold and approached its limit parameter value, and/or has reached its limit parameter value.

14. The working combination (10) according to Claim 12 or 13,
**characterized in that** the first vehicle (12) is an earth working machine (12) that applies a material onto the substrate (U), and the further vehicle (14) is a supply vehicle (14) that transfers material intended for application to the earth working machine (12), the earth working machine (12) being the leader vehicle (12) and the supply vehicle (14) being the follower vehicle (14).

## Revendications

1. Train de travail (10), comprenant une machine automotrice de traitement du sol (12) comme un premier véhicule (12) et au moins un autre véhicule automoteur (14), les véhicules (12, 14) du train de travail (10) étant adaptés à se déplacer l'un derrière l'autre dans une direction de travail commune (A) pendant une opération de travail déterminée avec un espacement déterminé situé dans une plage de valeurs d'espacement de consigne prédéterminée, le train de travail (10) présentant un dispositif de contrôle d'espacement (26) qui émet selon un état de détection dépendant d'un espacement réel (D, D', D") des véhicules (12, 14) du dispositif de contrôle d'espacement (26) un signal d'espacement qui contient une information sur l'espacement de véhicule (D, D', D"), le dispositif de contrôle d'espacement (26) présentant une source de rayonnement (28) émettant un rayonnement électromagnétique (32) et un agencement de capteur (30) sensible au rayonnement électromagnétique (32) de la source de rayonnement (28), dans lequel un véhicule (12) parmi le premier et l'autre véhicule (12, 14), en tant que véhicule source (12), porte la source de rayonnement (28), dans lequel, lorsque le train de travail (10) se trouve dans un état de référence prédéterminé, c'est-à-dire sur une base horizontale plane (U) avec des véhicules (12, 14) disposés à un espacement de référence prédéterminé (D) les uns des autres et prêts à travailler, la source de rayonnement (28) émet un rayonnement électromagnétique (32) de manière dirigée en direction de l'autre véhicule (14) respectif parmi le premier et l'autre véhicule (12, 14) en tant que véhicule cible (14) de telle sorte que le rayonnement électromagnétique (32) pour le contrôle de l'espacement n'est présent que dans un espace de rayonnement (40) qui s'étend sur une première plage angulaire (43) autour d'un premier axe d'espace de rayonnement (42) et sur une deuxième plage angulaire (46) autour d'un deuxième axe d'espace de rayonnement (44) formant un angle avec le premier axe d'espace de rayonnement (42), la deuxième plage angulaire (46) étant égale ou supérieure en grandeur à la première plage angulaire (43), et l'espace de rayonnement (40) étant incliné par rapport à la direction de travail (A) autour du premier axe d'espace de rayonnement (42),
**caractérisé en ce que** l'agencement de capteur (30) s'étend le long d'un axe de capteur (36) et est disposé sur le véhicule cible (14) pour être entraîné par celui-ci, dans lequel - lorsque le train de travail (10) est vu dans l'état de référence - une zone de détection de référence (34) axial au capteur prédéterminée est irradiée par la source de rayonnement (28) et dans lequel l'axe de capteur (36) est disposé de manière inclinée par rapport à une ligne droite de liaison (33) entre la zone de détection (34) et la source de rayonnement (28) autour d'un axe d'inclinaison (48) parallèle au premier axe d'espace de rayonnement (42), de sorte qu'une modification de l'espacement de véhicule (D, D", D") entraîne une modification de la position de la zone de détection (34) irradiée par la source de rayonnement (28) sur l'agencement de capteur (30) le long de l'axe de capteur (36) et ainsi une modification de l'état de détection de l'agencement de capteur (30).

2. Train de travail (10) selon la revendication 1,
**caractérisé en ce que** le véhicule cible (14) comprend au moins deux agencements de capteur (30) s'étendant le long d'un axe de capteur (36), lesquels axes de capteur (36) - lorsque le train de travail (10) est vu dans l'état de référence - sont disposés chacun de manière inclinée par rapport à une droite de liaison (33) entre la zone de détection (34) et la source de rayonnement (28) autour d'un axe d'inclinaison (48) parallèle au premier axe d'espace de rayonnement (42), dans lequel lesdits au moins deux agencements de capteur (30) sont disposés espacés l'un de l'autre dans la direction circonférentielle autour du deuxième axe d'espace de rayonnement (44).

3. Train de travail (10) selon la revendication 1 ou 2,
**caractérisé en ce que** ladite source de rayonnement (28) est une source de rayonnement laser (28) émettant une lumière laser en tant que rayonnement électromagnétique (32).

4. Train de travail (10) selon la revendication 3,
**caractérisé en ce que** la source de rayonnement (28) émet un rayonnement laser (32) oscillant ou tournant autour du deuxième axe d'espace de rayonnement (44).

5. Train de travail (10) selon l'une des revendications précédentes,
**caractérisé en ce que** le premier axe d'espace de rayonnement (42) est parallèle à l'axe de tangage (N1) du véhicule source (12) ou/et **en ce que** le deuxième axe d'espace de rayonnement (44) est situé dans ou parallèle à un plan défini par l'axe de lacet (G1) et l'axe de roulis (R1) du véhicule source (12).

6. Train de travail (10) selon la revendication 5,
**caractérisé en ce que** l'axe de capteur (36) d'au moins un agencement de capteur (30) présente, dans un système de coordonnées cartésien du véhicule comprenant des axes de roulis, de tangage et de lacet, une composante d'extension plus grande parallèlement au plan défini par l'axe de lacet (G2) et l'axe de roulis (R2) du véhicule cible (14) qu'orthogonalement à celui-ci.

7. Train de travail (10) selon l'une des revendications précédentes,
**caractérisé en ce que** le véhicule source (12) ou/et le véhicule cible (14) présente un actionneur (52, 56) qui est couplé de manière à transmettre le mouvement à la source de rayonnement (28) ou/et à l'agencement de capteur (30), de sorte que la source de rayonnement (28) ou/et ledit au moins un agencement de capteur (30) est/sont reçu(s) sur le véhicule (12, 14) les portant respectivement de manière à pouvoir être déplacé(s) de manière actionnable par rapport au corps de véhicule respectif (12a, 14a) autour d'un axe de réglage (50, 54) parallèle au premier axe d'espace de rayonnement (42).

8. Train de travail (10) selon l'une des revendications précédentes,
**caractérisé en ce que** le dispositif de contrôle d'espacement (26) comprend un dispositif de commande (58, 70), et
- **en ce que** le premier et/ou l'autre véhicule (12, 14) présente un dispositif de détection d'angle de lacet (74, 78) qui détecte un angle de lacet du véhicule respectif (12, 14), dans lequel au moins un dispositif de détection d'angle de lacet (74, 78) transmet au dispositif de commande (58, 70) un signal d'angle de lacet qui contient des informations sur l'angle de lacet d'au moins un véhicule (12, 14), dans lequel le dispositif de commande (58, 70) génère le signal d'espacement en fonction de l'état de détection dudit au moins un agencement de capteur (30) et en fonction du signal d'angle de lacet dudit au moins un dispositif de détection d'angle de lacet (74, 78),
ou/et
- **en ce que** le premier et/ou l'autre véhicule (12, 14) présente un dispositif de détection d'angle de tangage (76, 80) qui détecte un angle de tangage du véhicule respectif (12, 14), dans lequel au moins un dispositif de détection d'angle de tangage (76, 80) transmet au dispositif de commande (58, 70) un signal d'angle de tangage qui contient des informations sur l'angle de tangage d'au moins un véhicule (12, 14), dans lequel le dispositif de commande (58, 70) génère le signal d'espacement conformément à l'état de détection dudit au moins un agencement de capteur (30) et conformément au signal d'angle de tangage dudit au moins un dispositif de détection d'angle de tangage (76, 80).

9. Train de travail (10) selon la revendication 8,
**caractérisé en ce que** le signal d'angle de lacet contient des informations sur l'angle de lacet relatif entre le véhicule source et le véhicule cible (12, 14) et/ou **en ce que** le signal d'angle de tangage contient des informations sur l'angle de tangage relatif entre le véhicule source et le véhicule cible (12, 14).

10. Train de travail (10) selon l'une quelconque des revendications précédentes,
**caractérisé en ce que** le signal d'espacement comprend une information de fonctionnement relatif au fonctionnement d'un moteur d'entraînement (62, 64) et/ou d'un frein de véhicule d'au moins un des véhicules (12, 14).

11. Train de travail (10) selon l'une des revendications précédentes,
**caractérisé en ce que** les véhicules (12, 14) du train de travail (10) sont en liaison de communication de données entre eux par une liaison de communication de données dans au moins une direction de transmission de données.

12. Train de travail (10) selon l'une quelconque des revendications précédentes,
**caractérisé en ce qu'**un véhicule (12, 14) parmi le véhicule source (12) et le véhicule cible (14), en tant que véhicule de tête (12), indique une vitesse de déplacement le long de la direction de travail (A), et **en ce que** le signal d'espacement est émis vers l'autre véhicule (14) respectif parmi le véhicule source (12) et le véhicule cible (14), en tant que véhicule suiveur (14).

13. Train de travail (10) selon la revendication 12,
**caractérisé en ce que** le véhicule suiveur (14) est conçu pour indiquer au véhicule de tête (12) pendant une opération de travail déterminée qu'un paramètre de fonctionnement s'est approché de sa valeur limite de paramètre au-delà d'une valeur de seuil d'avertissement prédéterminée ou/et a atteint sa valeur limite de paramètre.

14. Train de travail (10) selon la revendication 12 ou 13,
**caractérisé en ce que** le premier véhicule (12) est une machine de traitement du sol (12) appliquant du matériau sur le sol (U) et l'autre véhicule (14) est un véhicule de livraison (14) qui transfère du matériau destiné à être appliqué à la machine de traitement du sol (12), la machine de traitement du sol (12) étant le véhicule de tête (12) et le véhicule de livraison (14) étant le véhicule suiveur (14).
